(19) **Europäisches Patentamt**
**European Patent Office**
**Office européen des brevets**

(11) **EP 4 401 194 B1**

(12) **EUROPEAN PATENT SPECIFICATION**

(45) Date of publication and mention
of the grant of the patent:
**04.02.2026 Bulletin 2026/06**

(21) Application number: **23214979.9**

(22) Date of filing: **07.12.2023**

(51) International Patent Classification (IPC):
*H01M 10/48* (2006.01)   *A24F 40/51* (2020.01)
*H01M 50/583* (2021.01)   *H01M 10/42* (2006.01)

(52) Cooperative Patent Classification (CPC):
**H01M 10/482; H01M 10/486;** H01M 50/204;
H01M 2010/4271; H01M 2200/105;
H01M 2200/106; Y02E 60/10

(54) **BATTERY PACK AND METHOD OF CONTROLLING THE SAME**

BATTERIEPACK UND VERFAHREN ZUR STEUERUNG DAVON

BLOC-BATTERIE ET SON PROCÉDÉ DE COMMANDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.01.2023 KR 20230004149**

(43) Date of publication of application:
**17.07.2024 Bulletin 2024/29**

(73) Proprietor: **Samsung SDI Co., Ltd.**
**Yongin-si, Gyeonggi-do 17084 (KR)**

(72) Inventors:
• **MOON, Soodeok**
**17084 Yongin-si (KR)**
• **LEE, Jihyeon**
**17084 Yongin-si (KR)**

(74) Representative: **Marks & Clerk LLP**
**15 Fetter Lane**
**London EC4A 1BW (GB)**

(56) References cited:
**EP-A1- 3 270 454      US-A1- 2011 210 703
US-A1- 2017 298 807**

**Description**

**BACKGROUND**

**1. Field**

One or more embodiments relate to a battery pack and a method of controlling the same.

**2. Description of the Related Art**

In general, secondary batteries are batteries that may be repeatedly charged and recharged unlike non-rechargeable primary batteries. Secondary batteries are used as energy sources of mobile devices, electric vehicles, hybrid vehicles, electric bicycles, uninterruptible power supplies, and/or the like. Depending on a type of an external device to be applied, a secondary battery may be used in a form of a single battery or in a form of a pack including a plurality of secondary batteries connected to each other and bundled in one unit.

A small mobile device, such as a mobile phone, is operable for a certain period of time with an output and capacity of a single battery, but when long-term operation or high-power operation are required, like in the case of a larger mobile device, such as a laptop computer, or an electric vehicle and/or a hybrid vehicle, which consume a lot of power, a pack including a plurality of batteries is desired due to output and capacity issues. Also, an output voltage or output current may be increased according to the number of embedded batteries.

United States Patent Application Publication US2011/210703A1 relates to a battery system that employs a plurality of PTC devices and an additional temperature sensor to provide safety and optimization features in a multi-cell battery system. The system provides both temperature fault detection and information that may be used for battery system performance optimization. A single negative temperature coefficient (NTC) thermistor and multiple PTC thermal protection devices are integrated into a battery block, and can be implemented as a single sensor package that is in thermal contact with each of the battery cells in the battery block.

**SUMMARY**

One or more embodiments include a battery pack and a method of controlling the same, in which erroneous detection of overheating may be prevented and overheating may be detected without omission by using together a first type temperature measurement element and a second type temperature measurement element, which have different resistance characteristics according to a temperature change.

Additional aspects will be set forth in part in the description which follows and, in part, will be apparent from the description, or may be learned by practice of the presented embodiments.

According to one or more embodiments, a battery pack includes battery cells, a first measurement circuit unit and a second measurement circuit unit configured to measure temperature information of the battery cells and respectively including a first type temperature measurement element and a second type temperature measurement element having different characteristics of a resistance change according to a temperature change, the first measurement circuit unit and the second measurement circuit unit being on a common base substrate or on different individual base substrates, and a battery management unit configured to determine whether the battery cells are overheated based on the temperature information of the battery cells.

A plurality of first type temperature measurement elements may be in series and respectively allocated to the battery cells in a direction in which the battery cells are arranged, and a plurality of second type temperature measurement elements that is less in number than a number of the plurality of first type temperature measurement elements arranged in the direction in which the battery cells are arranged.

The common base substrate or the individual base substrates may include a flexible insulating film or a rigid insulating substrate, the first type temperature measurement element or the second type temperature measurement element may be patterned or mounted in a form of a chip on the common base substrate or the individual base substrates.

The first type temperature measurement element has a positive characteristic as a characteristic of the resistance change according to the temperature change and display a nonlinear resistance change at an inflection point of a profile of the resistance change according to the temperature change, and the second type temperature measurement element has a negative characteristic as a characteristic of the resistance change according to the temperature change and display a linear resistance change in the profile of the resistance change according to the temperature change.

The battery management unit may be further configured to determine whether the battery cells are overheated based on a first voltage measurement value for combined resistance of the first type temperature measurement element measured by the first measurement circuit unit.

The battery management unit is further configured to calculate a resistance prediction value by substituting a temperature value of the second type temperature measurement element measured based on a measurement value of the second measurement circuit unit into a resistance calculation formula derived based on a resistance profile according to a temperature of the first type temperature measurement element, calculate a resistance measurement value based on a first voltage measurement value for combined resistance of the first type temperature measurement element measured by the first measurement circuit unit, and determine whether the battery cells are overheated based on the resistance prediction value and the resistance measurement value.

The battery management unit may be further configured to determine whether the battery cells are overheated by using a temperature resistance table calculated by substituting a value of the combined resistance of the first type temperature measurement element into a temperature calculation formula derived as an inverse function of the resistance calculation formula.

According to one or more embodiments, there is provided a method of controlling a battery pack including battery cells, a first measurement circuit unit and a second measurement circuit unit that are configured to measure temperature information of the battery cells and respectively including a first type temperature measurement element and a second type temperature measurement element having different characteristics of a resistance change according to a temperature change, the first measurement circuit unit and the second measurement circuit unit being formed on a common base substrate or different individual base substrates, and a battery management unit configured to determine whether the battery cells are overheated based on the temperature information of the battery cells, wherein the battery management unit is configured to determine whether the battery cells are overheated based on a first measurement value based on an output of the first measurement circuit unit and a second measurement value based on an output of the second measurement circuit unit.

A computer program stored in a recording medium to execute the method.

The first type temperature measurement element has a positive characteristic as a characteristic of the resistance change according to the temperature change and display a nonlinear resistance change at an inflection point of a profile of the resistance change according to the temperature change, and the second type temperature measurement element has a negative characteristic as a characteristic of the resistance change according to the temperature change and display a linear resistance change in the profile of the resistance change according to the temperature change.

The battery management unit may be further configured to determine whether the first measurement value is equal to or greater than a trigger point corresponding to the inflection point of the first type temperature measurement element and determine that the battery cells are overheated when the first measurement value is equal to or greater than the trigger point and the second measurement value is equal to or greater than a threshold value.

The battery management unit may be further configured to determine whether the battery cells are overheated based on a first voltage measurement value for combined resistance of the first type temperature measurement element measured by the first measurement circuit unit.

The battery management unit may be further configured to calculate a resistance prediction value by substituting a temperature value of the second type temperature measurement element measured based on a measurement value of the second measurement circuit unit into a resistance calculation formula derived based on a resistance profile according to a temperature of the first type temperature measurement element, calculate a resistance measurement value based on a first voltage measurement value for combined resistance of the first type temperature measurement element measured from the first measurement circuit unit, and determine whether the battery cells are overheated based on the resistance prediction value and the resistance measurement value.

The battery management unit may be further configured to determine whether the battery cells are overheated by using a temperature resistance table calculated by substituting a value of the combined resistance of the first type temperature measurement element into a temperature calculation formula derived as an inverse function of the resistance calculation formula.

According to one or more embodiments, there is provided a computer program stored in a recording medium to execute the method by using a computing device.

Other aspects, features, and advantages of the disclosure will become more apparent from the detailed description, the claims, and the drawings.

At least some of the above and other features of the invention are set out in the claims.

## BRIEF DESCRIPTION OF THE DRAWINGS

The above and other aspects and features of embodiments will be more apparent from the following description taken in conjunction with the accompanying drawings, in which:

FIG. 1 is an exploded perspective view of a battery pack, according to one or more embodiments;
FIG. 2 is a perspective view of a battery cell of FIG. 1;
FIG. 3 is a view illustrating an arrangement of a measurement circuit unit of FIG. 1;

FIG. 4 is a diagram illustrating the behavior of a positive temperature coefficient (PTC), in which a resistance change according to a temperature change has a positive characteristic according to one or more embodiments of a first type temperature measurement element. FIG. 5 is a diagram of the behavior of a negative temperature coefficient (NTC), in which a resistance change according to a temperature change has a negative characteristic, according to one or more embodiments of a second type temperature measurement element;

FIG. 6 is a view illustrating a configuration of a measurement circuit unit, according to one or more embodiments;

FIG. 7 is a view illustrating a configuration of a measurement circuit unit, according to one or more embodiments;

FIGS. 8A to 8D are views illustrating a configuration of a measurement circuit unit, according to one or more embodiments;

FIG. 9 is a view for describing a battery pack according to a modified embodiment of FIG. 3;

FIG. 10 is a view for describing a battery pack according to a modified embodiment of FIG. 1;

FIG. 11 is a view illustrating a connection state of a first measurement circuit unit and a second measurement circuit unit;

FIG. 12 is a flowchart for describing a method of controlling a battery pack, according to one or more embodiments;

FIG. 13 is a diagram illustrating a schematic configuration of a battery management system, according to one or more embodiments;

FIGS. 14 and 15 are diagrams for describing a method of determining whether a battery cell is overheated by using a voltage value for combined resistance of a first type temperature measurement element, according to one or more embodiments;

FIG. 16 is a diagram for describing a method of determining whether a battery cell is overheated by using a resistance calculation formula and a resistance profile according to a temperature of a first type temperature measurement element, according to one or more embodiments; and

FIG. 17 is a flowchart for describing a method of controlling a battery pack, according to one or more embodiments.

## DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

As the present disclosure allows for various changes and numerous embodiments, certain embodiments will be illustrated in the drawings and described in the detailed description. Effects, aspects, and features of the present disclosure, and methods for achieving them will be clarified with reference to embodiments described below in detail with reference to the drawings. However, the present disclosure is not limited to the following embodiments and may be embodied in various forms.

Hereinafter, embodiments will be described in detail with reference to the accompanying drawings, wherein the same or corresponding elements are denoted by the same reference numerals throughout and a repeated description thereof is omitted.

Although the terms "first," "second," etc. may be used to describe various elements, these elements should not be limited by these terms. These terms are only used to distinguish one element from another. The singular forms "a," "an," and "the" are intended to include the plural forms as well, unless the context clearly indicates otherwise. It will be further understood that the terms "comprises" or "comprising" used herein specify the presence of stated features or components, but do not preclude the presence or addition of one or more other features or components.

Sizes of components in the drawings may be exaggerated or contracted for convenience of explanation. For example, because sizes and thicknesses of elements in the drawings are arbitrarily illustrated for convenience of explanation, the present disclosure is not limited thereto.

It will be further understood that, when a region, component, unit, block, or module is referred to as being "on" another region, component, unit, block, or module, it may be directly on the other region, component, unit, block, or module or may be indirectly on the other region, component, unit, block, or module with intervening regions, components, units, blocks, or modules therebetween. It will be further understood that, when a region, component, unit, block, or module is referred to as being connected to another region, component, unit, block, or module, it may be directly connected to the other region, component, unit, block, or module or may be indirectly connected to the other region, component, unit, block, or module with intervening regions, components, units, blocks, or modules therebetween.

Various embodiments of the present disclosure will now be described more fully with reference to the accompanying drawings for one of ordinary skill in the art to be able to perform the present disclosure without any difficulty.

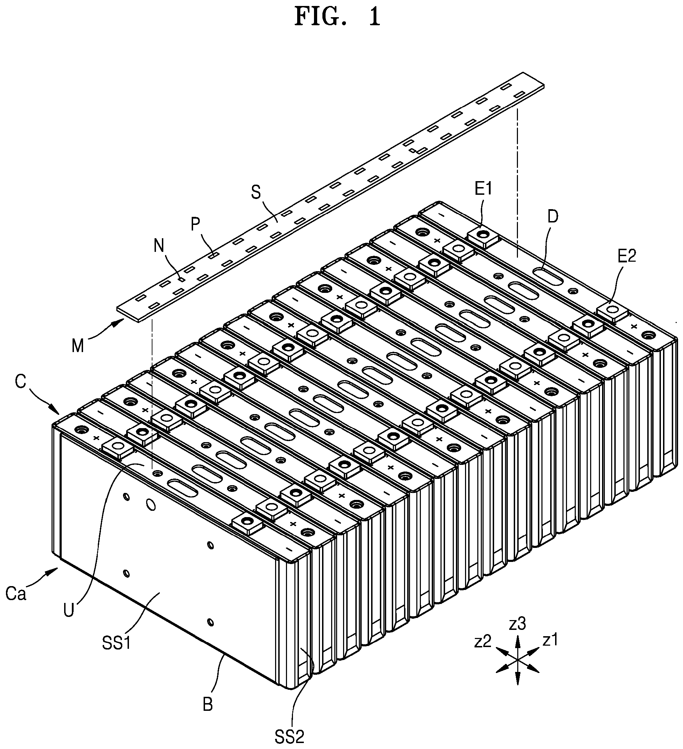

Referring to the drawings, for example, FIGS. 1-9, a battery pack according to one or more embodiments may include a battery cell C and a measurement circuit unit M configured to measure temperature information of the battery cell C and including a first measurement circuit unit M1 and a second measurement circuit unit M2, which respectively include a first type temperature measurement element P and a second type temperature measurement element N that have different characteristics of a resistance change according to a temperature change, wherein the first measurement circuit unit M1 and the second measurement circuit unit M2 are formed on a common base substrate S.

The battery pack according to one or more embodiments may include a plurality of battery cells C arranged in a first direction Z1. The battery cell C may be provided in any one of various shapes, such as a prismatic shape and a circular (e.g., cylindrical) shape, and according to one or more embodiments, the battery cell C may be provided as a prismatic battery cell including a case Ca having a substantially hexahedral shape. According to one or more embodiments, the battery cell C may be provided as a circular battery cell including the case Ca having a substantially cylindrical shape.

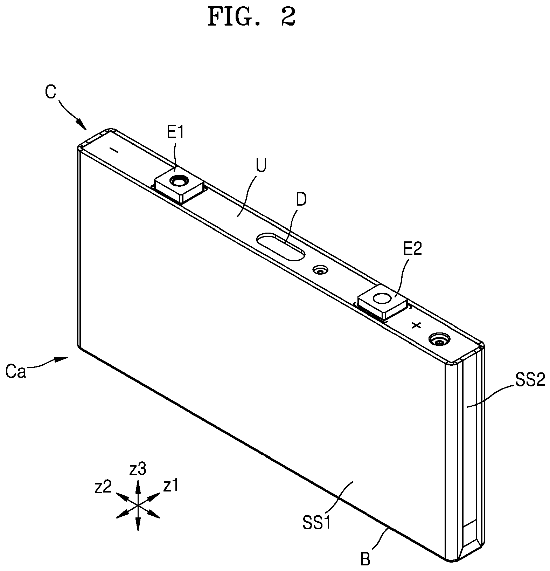

For example, now referring to FIGS. 2-3, the battery cell C may include an electrode assembly, the case Ca in which the electrode assembly is accommodated, and a first electrode E1 and a second electrode E2 formed on the case Ca and electrically connected to the electrode assembly. For example, the first electrode E1 and the second electrode E2 may be different electrodes that are spaced from each other in a second direction Z2 crossing the first direction Z1. According to one or more embodiments, the battery cell C may be provided as, depending on a type of the case Ca, a prismatic battery cell that includes a relatively rigid frame and has a hexahedral shape, or a pouch-type battery cell that includes the case Ca having a relatively flexible pouch shape. Technical features described below are substantially identically applied to both the prismatic battery cell and the pouch-type battery cell.

According to one or more embodiments, the battery cell C or the case Ca forming an exterior of the battery cell C may include an electrode surface U where the first electrode E1 and the second electrode E2 are formed, a bottom surface B opposite to the electrode surface U, a wide side surface SS1 occupying a relatively large area and where the plurality of battery cells C that are arranged in the first direction Z1 face each other, and a narrow side surface SS2 occupying a relatively small area, where the wide side surface SS1 and the narrow side surface SS2 connect the electrode surface U and the bottom surface B to each other. For example, the electrode surface U and the bottom surface B may be opposite each other in a third direction Z3 crossing the first direction Z1 and the second direction Z2.

The battery pack according to one or more embodiments may include the measurement circuit unit M configured to measure temperature information of the battery cell C. The measurement circuit unit M may extend in the first direction Z1 in which the battery cells C are arranged, and may extend along the electrode surface U or the narrow side surface SS2 of the battery cell C or extend generally in the first direction Z1 while one or more branches are provided between the wide side surfaces SS1 of the neighboring battery cells C.

According to one or more embodiments, the measurement circuit unit M may extend in the first direction Z1 in which the battery cells C are arranged, and may be located between the different first electrode E1 and second electrode E2 arranged at both edge locations in the second direction Z2. For example, the measurement circuit unit M may be located, in the second direction Z2, between one of the first electrode E1 and the second electrode E2 and a vent hole D formed at a center location between the first electrode E1 and the second electrode E2. Because the measurement circuit unit M is located between one of the first electrode E1 and the second electrode E2 and the vent hole D, release of high-temperature high-pressure gas discharged through the vent hole D may not be disturbed and damage caused by the release of the high-temperature high-pressure gas may be avoided.

The battery pack according to one or more embodiments is for measuring temperature information of the battery cell C, and may include the first measurement circuit unit M1 and the second measurement circuit unit M2 respectively including the first type temperature measurement element P and the second type temperature measurement element N that have different characteristics of the resistance change according to the temperature change.

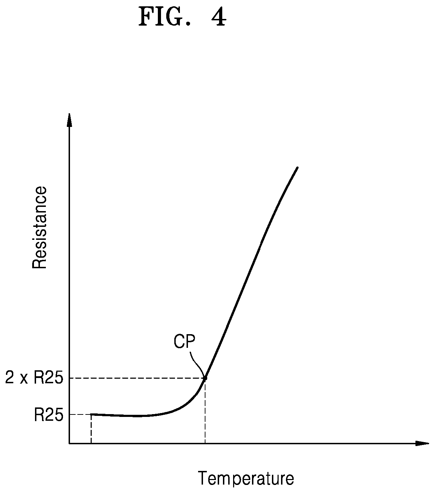

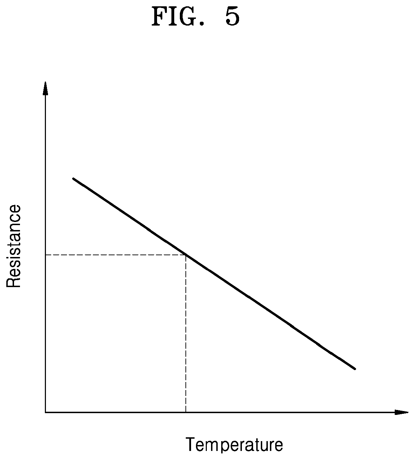

For example, the first type temperature measurement element P may include a positive temperature coefficient (PTC) device that displays a positive characteristic for a change in electric resistance according to the temperature change, and the second type temperature measurement element N may include a negative temperature coefficient (NTC) device that displays a negative characteristic for a change in electric resistance according to the temperature change. In more detail, FIGS. 4 and 5 illustrate a profile showing the positive characteristic of the first type temperature measurement element P and a profile showing the negative characteristic of the second type temperature measurement element N, respectively. For example, the first type temperature measurement element P may have a nonlinear behavior in which there is almost no change in a relatively low temperature section according to a temperature change from a room temperature (e.g., a room temperature resistance: R25), but a rapid change is displayed from a relatively high temperature section around an inflection point CP (e.g., twice the room temperature resistance: 2 x R25). In detail, resistance may barely change according to the temperature change in the relatively low temperature section, but may rapidly change in a high temperature section equal to or higher than a temperature (e.g., the inflection point CP) corresponding to resistance (2 x R25) that is twice the room temperature resistance (R25). For example, an abnormal temperature may be sensed by detecting a threshold point (e.g., the inflection point CP) where a rapid resistance change of the first type temperature measurement element P is started according to an increase in a temperature, and the abnormal temperature or a sign of the abnormal temperature may be sensed by detecting a threshold value (e.g., the pre-set threshold point).

According to one or more embodiments, together with the first type temperature measurement element P, the second type temperature measurement element N having a different resistance characteristic from the first type temperature measurement element P is introduced, and overheating is determined considering outputs of the first type temperature measurement element P and the second type temperature measurement element N together. Accordingly, compared to a comparative example of determining overheating only with the output of the first type temperature measurement element P, an abnormal temperature or overheating of the battery cell C may be precisely detected without omission. As described above, due to a rapid resistance change in a high temperature section and a nonlinear behavior, it may not be easy for the first type temperature measurement element P to accurately measure a temperature of the battery cell C.

Unlike the nonlinear behavior of the first type temperature measurement element P, the second type temperature measurement element N may display a substantially linear change from a room temperature. The second type temperature measurement element N may display an substantially linear change throughout a low temperature section and a high temperature section instead of a nonlinear behavior that is different in the low temperature section and the high temperature section like the first type temperature measurement element P. Accordingly, a temperature of the battery cell C may be more accurately measured through the second type temperature measurement element N rather than the first type temperature measurement element P. According to one or more embodiments, erroneous detection of overheating may be prevented and overheating may be detected without omission by introducing together the first type temperature measurement element P and the second type temperature measurement element N having different characteristics of a resistance change according to a temperature change.

As shown in FIGS. 1-6, the battery pack according to one or more embodiments may include the plurality of battery cells C arranged in one column in the first direction Z1, and may include the measurement circuit unit M for measuring state information from the plurality of battery cells C arranged in one column. Here, the measurement circuit unit M may include the first measurement circuit unit M1 including at least two first type temperature measurement elements P arranged at different measurement locations, and the second measurement circuit unit M2 including at least two second type temperature measurement elements N arranged at different measurement locations. The first measurement circuit unit M1 may include at least two first measurement circuit units M1 each including the plurality of first type temperature measurement elements P.

According to one or more embodiments, the first measurement circuit unit M1 may include the plurality of first type temperature measurement elements P arranged to be allocated respectively for the battery cells C, in the first direction Z1 in which the battery cells C are arranged. Here, each first type temperature measurement element P may display a change in resistance while reacting to a temperature of each allocated battery cell C. According to one or more embodiments, the plurality of first type temperature measurement elements P may be arranged in one column in the first direction Z1 at edge locations of the first measurement circuit unit M1 in the first direction Z1, and may be arranged at measurement locations corresponding to the battery cells C respectively.

According to one or more embodiments, the first measurement circuit unit M1 may include two or more first measurement circuit units M1, and for example, may include a (1-1)th measurement circuit unit M1-1 and a (1-2)th measurement circuit unit M1-2. According to one or more embodiments, a pair of the first measurement circuit units M1 may be arranged at different measurement locations on left and right in the second direction Z2 to detect a temperature of the battery cell C at different measurement locations. Also, the first measurement circuit units M1 having substantially the same configuration may be arranged at symmetric locations in the second direction Z2, and thus even when one first measurement circuit unit M1 is disconnected, redundancy may be provided through another first measurement circuit unit M1 such that temperature detection is not stopped. However, according to one or more embodiments, there may be a single first measurement circuit unit M1 rather than the pair of first measurement circuit units M1 being arranged at different measurement locations on left and right in the second direction Z2. For example, a temperature of the battery cell C may be detected through a single first measurement circuit unit M1 arranged at a measurement location on left or right in the second direction Z2 or at a center measurement location in the second direction Z2.

In each first measurement circuit unit M1, the first type temperature measurement elements P may be connected to each other in series between both ends of the first measurement circuit unit M1. In other words, the first type temperature measurement elements P may be connected to each other in series between both ends of the first measurement circuit unit M1, in the first direction Z1 in which the battery cells C are arranged, and an abnormal temperature or overheating of the battery cell C may be detected through combined resistance obtained by adding resistances of the first type temperature measurement elements P connected to each other in series. As described above, the pair of first measurement circuit units M1 arranged to provide redundancy at different measurement locations in the second direction Z2 may have substantially the same structure, may each detect the combined resistance obtained by adding the resistances of the plurality of first type temperature measurement elements P connected to each other in series between both ends of the first measurement circuit unit M1, and may detect a separate combined resistance for each first measurement circuit unit M1.

According to one or more embodiments, an abnormal temperature or overheating of the battery cell C may be detected considering all combined resistances of the different first measurement circuit units M1, for example, a maximum value or average value of different combined resistances of the different first measurement circuit units M1, or selectively considering only one of the combined resistances of the first measurement circuit units M1. The combined resistances output from the different first measurement circuit units M1 may be used as inputs to determine whether a disconnection condition of the first measurement circuit unit M1 is satisfied, and an abnormal temperature or overheating of the battery cell C may be detected by excluding combined resistance of a disconnected first measurement circuit unit M1 and using combined resistance of a remaining first measurement circuit unit M1.

Unlike the first measurement circuit unit M1, the second measurement circuit unit M2 may include at least two second measurement circuit units M2 each including a single second type temperature measurement element N, and according to one or more embodiments, the second measurement circuit unit M2 may include two second measurement circuit units M2, for example, a (2-1)$^{th}$ measurement circuit unit M2-1 and a (2-2)$^{th}$ measurement circuit unit M2-2. According to one or more embodiments, the different second measurement circuit units M2 (the (2-1)$^{th}$ measurement circuit unit M2-1 and the (2-2)$^{th}$ measurement circuit unit M2-2) may include different second type temperature measurement elements N for detecting a temperature of the battery cell C at different measurement locations by being arranged at different measurement locations in the first direction Z1 in which the battery cells C are arranged.

In other words, according to one or more embodiments, the second type temperature measurement elements N may each form the second measurement circuit unit M2, and the different second type temperature measurement elements N may be connected to both ends of the different second measurement circuit units M2 to be connected to a battery management system BMS described below, through different measurement channels. According to one or more embodiments, an output of the second type temperature measurement element N may be connected to the different first electrode E1 and second electrode E2 of the battery management system BMS through the different second measurement circuit units M2 (e.g., wires of the second measurement circuit units M2) providing the different measurement channels. According to one or more embodiments, the second type temperature measurement element N may be provided in a form of a chip, and an output of the second type temperature measurement element N may be input to the battery management system BMS through a dedicated measurement channel or the second measurement circuit unit M2 (e.g., the wire of the second measurement circuit unit M2).

According to one or more embodiments, a pair of the second measurement circuit units M2 may be arranged at measurement locations between the pair of first measurement circuit units M1 arranged at both edge locations of the measurement circuit unit M in the second direction Z2. The second type temperature measurement elements N respectively included in the pair of second measurement circuit units M2 may be arranged at different measurement locations in the first direction Z1 and also, may be arranged at different measurement locations in the second direction Z2 so as to avoid physical interference between the second measurement circuit units M2 arranged adjacent to each other in the second direction Z2. In other words, the second type temperature measurement elements N respectively included in the pair of second measurement circuit units M2 may be arranged at measurement locations spaced from each other in the first direction Z1 and the second direction Z2, and for example, may be arranged along diagonal locations following the first direction Z1 and the second direction Z2 together.

The different first measurement circuit units M1 (the (1-1)$^{th}$ measurement circuit unit M1-1 and (1-2)$^{th}$ measurement circuit unit M1-2) and the different second measurement circuit units M2 (e.g., the (2-1)$^{th}$ measurement circuit unit M2-1 and (2-2)$^{th}$ measurement circuit unit M2-2) may share a ground wire G. The ground wire G may be located at a center location between the different second measurement circuit units M2 in the second direction Z2, and may include two or more conductive wires G1 and a connecting wire G2 between the different conductive wires G1, considering wire resistance. The ground wire G may provide one ends of the different first measurement circuit units M1 (e.g., the (1-1)$^{th}$ measurement circuit unit M1-1 and (1-2)$^{th}$ measurement circuit unit M1-2) and the different second measurement circuit units M2 (e.g., the (2-1)$^{th}$ measurement circuit unit M2-1 and (2-2)$^{th}$ measurement circuit unit M2-2).

According to one or more embodiments, the different first measurement circuit units M1 (e.g., the (1-1)$^{th}$ measurement circuit unit M1-1 and (1-2)$^{th}$ measurement circuit unit M1-2) may be arranged at the edge locations of the measurement circuit unit M in the second direction Z2, the ground wire G may be arranged at the center location between the different first measurement circuit units M1 (e.g., the (1-1)$^{th}$ measurement circuit unit M1-1 and (1-2)$^{th}$ measurement circuit unit M1-2), and the different second measurement circuit units M2 (e.g., the (2-1)$^{th}$ measurement circuit unit M2-1 and (2-2)$^{th}$ measurement circuit unit M2-2) may be respectively arranged between the ground wire G and the first measurement circuit units M1 (e.g., the (1-1)$^{th}$ measurement circuit unit M1-1 and (1-2)$^{th}$ measurement circuit unit M1-2).

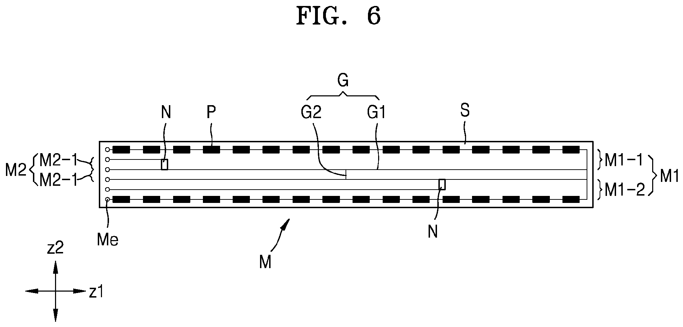

In an embodiment shown in FIG. 6, the different first measurement circuit units M1, i.e., the (1-1)$^{th}$ measurement circuit unit M1-1 and (1-2)$^{th}$ measurement circuit unit M1-2, may include the plurality of first type temperature measurement elements P arranged symmetrically, and may detect an abnormal temperature or overheating of the battery cell C in balanced back and forth in the first direction Z1 through the first type temperature measurement elements P arranged in balanced back and forth in the first direction Z1 in which the battery cells C are arranged. For example, in the embodiment of FIG. 6, the (1-1)$^{th}$ measurement circuit unit M1-1 and (1-2)$^{th}$ measurement circuit unit M1-2 may expect substantially the same output when ignoring a temperature deviation and measurement error in the second direction Z2.

The first type temperature measurement elements P may be arranged in the first direction Z1 at the edge locations (e.g., the edge locations of electrode surface U on the substrate S) in the second direction Z2 in which the different first measurement circuit units M1 face each other, and may sensitively react to temperatures inside the battery cells C through the first electrode E1 and the second electrode E2 of the battery cells C at the edge locations (e.g., the edge locations of the substrate S) in the second direction Z2. Also, the first type temperature measurement elements P may be symmetrically arranged at the edge locations on farthest both sides in the second direction Z2 so as to avoid physical interference or thermal interference between the different first type temperature measurement elements P belonging to the different first measurement circuit units M1. Accordingly, the plurality of first type temperature measurement elements P may be connected to each other along wires at the edge locations in the second direction Z2 at each first measurement circuit unit M1, and the first type temperature measurement elements P may not be connected to a wire at an inner location in the second direction Z2.

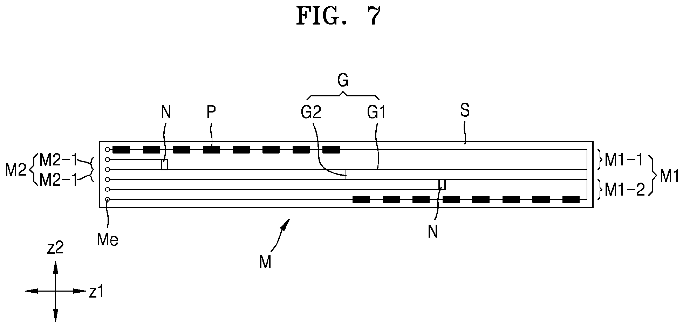

FIG. 7 is a view schematically illustrating the measurement circuit unit M, according to one or more embodiments. The measurement circuit unit M of FIG. 7 may include the different first measurement circuit units M1 (e.g., the (1-1)th measurement circuit unit M1-1 and (1-2)th measurement circuit unit M1-2), and each of the first measurement circuit units M1 (e.g., the (1-1)th measurement circuit unit M1-1 and (1-2)th measurement circuit unit M1-2) may include the plurality of first type temperature measurement elements P connected to each other in series between both ends.

In an embodiment shown in FIG. 7, the different first measurement circuit units M1, i.e., the (1-1)th measurement circuit unit M1-1 and (1-2)th measurement circuit unit M1-2, may include the plurality of first type temperature measurement elements P arranged asymmetrically. The (1-1)th measurement circuit unit M1-1 may include the plurality of first type temperature measurement elements P concentrated in the front in the first direction Z1 in which the battery cells C are arranged, whereas the (1-2)th measurement circuit unit M1-2 may include the plurality of first type temperature measurement elements P concentrated in the rear in the first direction Z1. As such, the plurality of first type temperature measurement elements P are arranged to have different measurement locations in the first direction Z1 in which the battery cells C are arranged, for example, the (1-1)th measurement circuit unit M1-1 includes the plurality of first type temperature measurement elements P arranged at front measurement locations in the first direction Z1 while the (1-2)th measurement circuit unit M1-2 includes the plurality of first type temperature measurement elements P arranged at rear measurement locations in the first direction Z1. Accordingly, an abnormal temperature or overheating of the battery cells C arranged forward in the first direction Z1 may be sensitively detected through an output of the (1-1)th measurement circuit unit M1-1, and an abnormal temperature or overheating of the battery cells C arranged backward in the first direction Z1 may be sensitively detected through an output of the (1-2)th measurement circuit unit M1-2. For example, an abnormal temperature or overheating of the battery cells C arranged in the first direction Z1 may be sensed in balanced back and forth, by combining the outputs of the (1-1)th measurement circuit unit M1-1 and (1-2)th measurement circuit unit M1-2.

For example, according to one or more embodiments, the number of first type temperature measurement elements P included in the (1-1)th measurement circuit unit M1-1 may be designed to be the same as the number of first type temperature measurement elements P included in the (1-2)th measurement circuit unit M1-2. The number of first type temperature measurement elements P included in the entire first measurement circuit units M1 in the first direction Z1 in which the battery cells C are arranged may be halved, and the (1-1)th measurement circuit unit M1-1 may be formed by connecting the half of the first type temperature measurement elements P arranged at the front measurement locations in the first direction Z1 and the (1-2)th measurement circuit unit M1-2 may be formed by connecting the remaining half of the first type temperature measurement elements P arranged at the rear measurement locations, thereby equally dividing a measurement load of the (1-1)th measurement circuit unit M1-1 and a measurement load of the (1-2)th measurement circuit unit M1-2.

According to one or more embodiments, considering that the number of front measurement locations (or the number of front battery cells C) and the number of rear measurement locations (or the number of rear battery cells C), which are handled by the (1-1)th measurement circuit unit M1-1 and (1-2)th measurement circuit unit M1-2, respectively, are the same, a deviation between the combined resistance of the (1-1)th measurement circuit unit M1-1 and the combined resistance of the (1-2)th measurement circuit unit M1-2 caused by wire resistance may be easily removed or reduced when wire resistance of the (1-1)th measurement circuit unit M1-1 and wire resistance of the (1-2)th measurement circuit unit M1-2 are designed to be balanced. In this regard, according to one or more embodiments, an entire wire length of the (1-1)th measurement circuit unit M1-1 and an entire wire length of the (1-2)th measurement circuit unit M1-2 may be designed to be the same. For example, when a terminal Me formed at one end portion of the first measurement circuit unit M1 is connected to an electrode of the battery management system BMS at a forward location of the first measurement circuit unit M1 in the first direction Z1, the (1-1)th measurement circuit unit M1-1 in charge of the relatively front measurement location does not extend across only the front measurement locations (e.g., the front first type temperature measurement elements P) in the first direction Z1, but may include an extending portion extending in the first direction Z1 at backwards to be balanced with the (1-2)th measurement circuit unit M1-2 in the entire wire length.

According to one or more embodiments, the number of first type temperature measurement elements P included in the (1-1)$^{th}$ measurement circuit unit M1-1 may be designed to be different from the number of first type temperature measurement elements P included in the (1-2)$^{th}$ measurement circuit unit M1-2. The number of first type temperature measurement elements P included in the entire first measurement circuit units M1 in the first direction Z1 in which the battery cells C are arranged may be divided at a set ratio, and the (1-1)$^{th}$ measurement circuit unit M1-1 may be formed by connecting some of the first type temperature measurement elements P arranged at the front measurement locations in the first direction Z1 and the (1-2)$^{th}$ measurement circuit unit M1-2 may be formed by connecting the remaining ones of the first type temperature measurement elements P arranged at the rear measurement locations.

For example, according to one or more embodiments, considering characteristics of the first type temperature measurement elements P, such as dispersion or resolution of the first type temperature measurement elements P, the number of first type temperature measurement elements P may be divided in an odd number, such as trisection, instead of bisection, so as to configure different first measurement circuit units M1.

In the embodiment shown in FIG. 7, the number of first type temperature measurement elements P included in the measurement circuit unit M is reduced as a whole by using the different first measurement circuit units M1 having an asymmetric arrangement of the first type temperature measurement elements P, thereby reducing manufacturing costs of the measurement circuit unit M. Also, by reducing the number of the plurality of first type temperature measurement elements P arranged in the first direction Z1 in half, the different (1-1)$^{th}$ measurement circuit unit M1-1 is formed by using the half of the first type temperature measurement elements P and the (1-2)$^{th}$ measurement circuit unit M1-2 is formed by using the remaining half of the first type temperature measurement elements P. Accordingly, even when one first measurement circuit unit M1 is disconnected, an abnormal temperature or overheating may be detected without stopping temperature measurement, by using the remaining first measurement circuit unit M1.

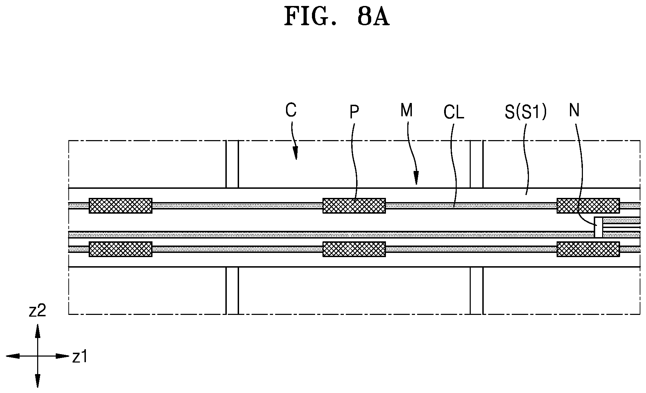

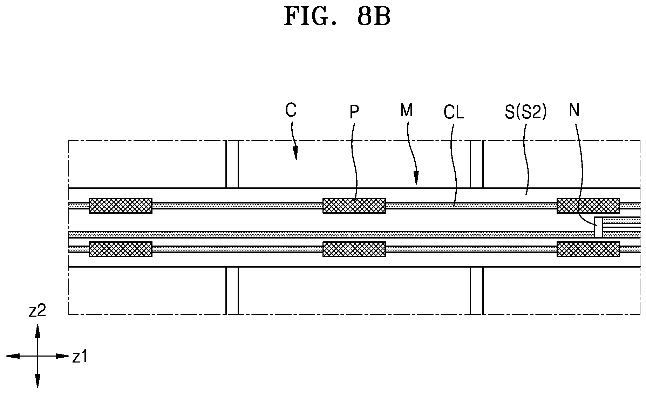

Referring to FIGS. 8A and 8B together, the measurement circuit unit M may be packaged, as the common base substrate S forming a support base of the measurement circuit unit M, to a flexible circuit board including a flexible insulating film S1 or a rigid circuit board including a rigid insulating substrate S2, and the first measurement circuit unit M1 and the second measurement circuit unit M2 may be modularized as one component that is not separated from each other. In detail, the first measurement circuit unit M1 and the second measurement circuit unit M2 may be supported on the common base substrate S, and for example, the first measurement circuit unit M1 and the second measurement circuit unit M2 may be supported on the flexible insulating film S1 that is the common base substrate S and thus may be packaged to one flexible circuit board, or the first measurement circuit unit M1 and the second measurement circuit unit M2 may be supported on the rigid insulating substrate S2 that is the common base substrate S and thus may be packaged to one rigid circuit board. For reference, in the present specification, an edge location or center location of the measurement circuit unit M in the second direction Z2 crossing the first direction Z1 in which the battery cells C are arranged may correspond to an edge location or center location of the common base substrate S forming a base of the measurement circuit unit M.

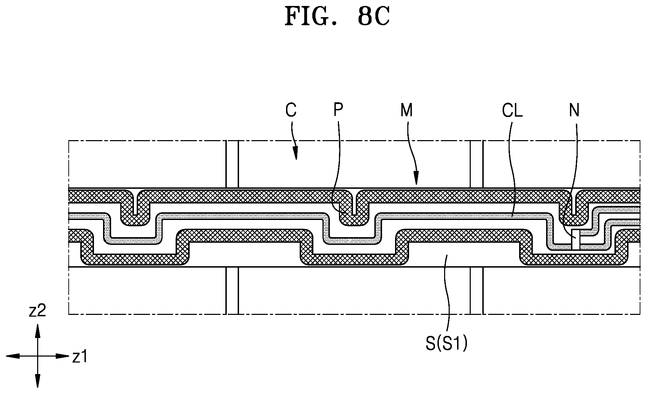

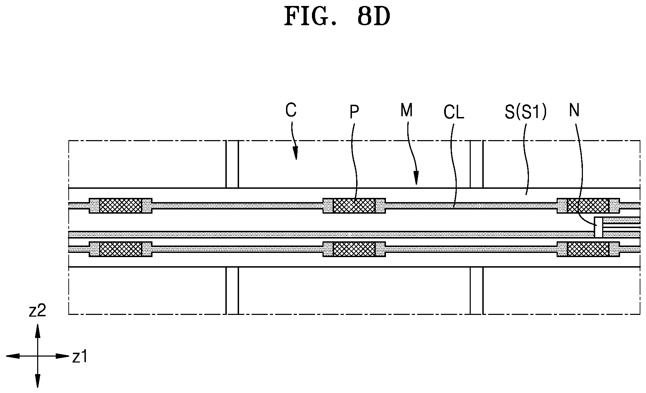

Referring to FIGS. 8A to 8D, according to one or more embodiments, the first type temperature measurement element P and the second type temperature measurement element N may be realized in various forms. For example, the first type temperature measurement element P may be patterned on the common base substrate S by using a print screen (FIGS. 8A and 8B), or may be mounted on the common base substrate S in a form of a chip (FIG. 8D). Also, the second type temperature measurement element N may be mounted on the common base substrate S in a form of a chip (FIGS. 8A to 8D). Here, a conductive line CL may be patterned on the common base substrate S. The conductive line CL may be connected to the first type temperature measurement element P patterned on the common base substrate S by using the print screen (FIGS. 8A and 8B) or the second type temperature measurement element N that is mounted on the common base substrate S in a form of a chip (FIGS. 8A to 8D). Referring to FIGS. 8A and 8B, according to one or more embodiments, the first measurement circuit unit M1 and the second measurement circuit unit M2 may be supported on the common base substrate S by using the flexible insulating film S1 as the common base substrate S (FIG. 8A) or may be supported on the common base substrate S by using the rigid insulating substrate S2 as the common base substrate S (FIG. 8B). Also, the first type temperature measurement element P may be patterned on the common base substrate S by using the print screen (FIGS. 8A and 8B) or mounted in a form of a chip (FIG. 8D), and the second type temperature measurement element N may be mounted on the common base substrate S in a form of a chip. Referring to FIG. 8C, the first type temperature measurement element P may be patterned by the conductive line CL on the common base substrate S, and for example, a bent portion for increasing resistance may be formed in a partial section of the conductive line CL to easily measure a change in resistance according to a temperature change.

According to one or more embodiments, the second type temperature measurement element N may be provided in a form of a chip and may configure a dedicated second measurement circuit unit M2 for providing a separate measurement channel. Accordingly, the number of second type temperature measurement elements N may be less than that of the first type temperature measurement elements P due to spatial restriction and channel restriction of the battery management system BMS receiving a signal of the second type temperature measurement element N through each measurement channel. However, according to one or more embodiments, the numbers of the first type temperature measurement elements P and the second type temperature measurement elements N may be designed to be the same.

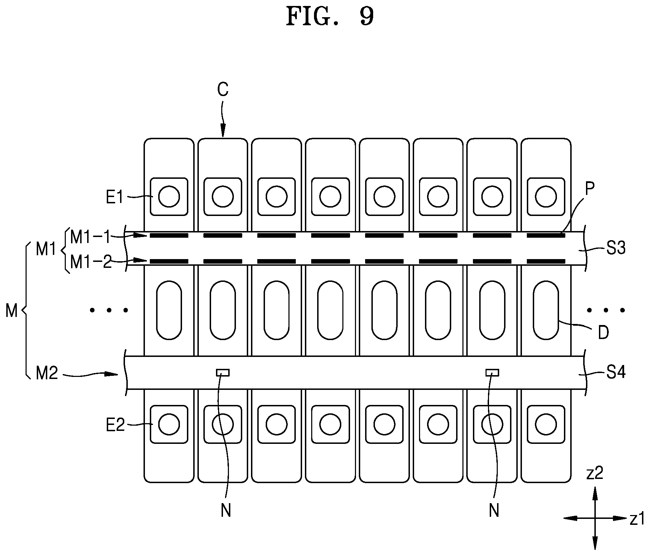

According to one or more embodiments, the first type temperature measurement element P and the second type temperature measurement element N may have the same structure or different structures, and the first type temperature measurement element P or second type temperature measurement element N may be patterned or mounted in a form of a chip on the common base substrate S or individual base substrates S3 and S4 of FIG. 9. According to one or more embodiments, the first type temperature measurement element P or second type temperature measurement element N may be patterned by using the print screen or patterned by the conductive line CL including the bent portion.

Referring to FIGS. 1 and 2, according to one or more embodiments, the measurement circuit unit M including the first type temperature measurement element P and the second type temperature measurement element N may extend across the electrode surface U of the battery cell C in the first direction Z1. According to one or more embodiments, the measurement circuit unit M may extend across the wide side surface SS1, the narrow side surface SS2, or the bottom surface B, in addition to the electrode surface U of the battery cell C, and may be arranged to surround at least two of the electrode surface U, the wide side surface SS1, the narrow side surface SS2, or the bottom surface B of the battery cell C.

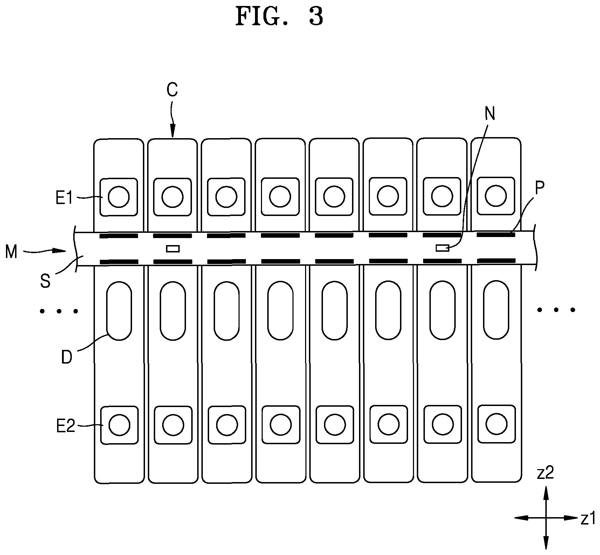

FIG. 9 is a view for describing a battery pack according to a modified embodiment of FIG. 3. Referring to FIG. 9, the first measurement circuit unit M1 including the first type temperature measurement element P and the second measurement circuit unit M2 including the second type temperature measurement element N may be formed on different individual base substrates S3 and S4, and for example, may be arranged on opposite sides of the battery cells C based on the vent holes D of the battery cells C.

In an embodiment shown in FIG. 9, the first measurement circuit unit M1 may include the pair of first measurement circuit units M1 (e.g., the (1-1)th measurement circuit unit M1-1 and (1-2)th measurement circuit unit M1-2) arranged on both sides of the base substrate S3, but according to one or more embodiments, the first measurement circuit unit M1 may include a single first measurement circuit unit M1 located at a center location of the base substrate S3. In this case as well, the first measurement circuit unit M1 and the second measurement circuit unit M2 may be respectively arranged on opposite sides of the battery cells C based on the vent holes D of the battery cells C.

In the embodiment shown in FIG. 9, the first measurement circuit units M1 and the second measurement circuit units M2 may be formed together on the electrode surfaces U of the battery cells C, but the first measurement circuit units M1 and the second measurement circuit units M2 may be arranged on different surfaces from among the electrode surfaces U, the wide side surfaces SS1, the narrow side surfaces SS2, and the bottom surfaces B of the battery cells C, and at least some of the first measurement circuit units M1 and the second measurement circuit units M2 may be arranged on different surfaces while surrounding other neighboring surfaces.

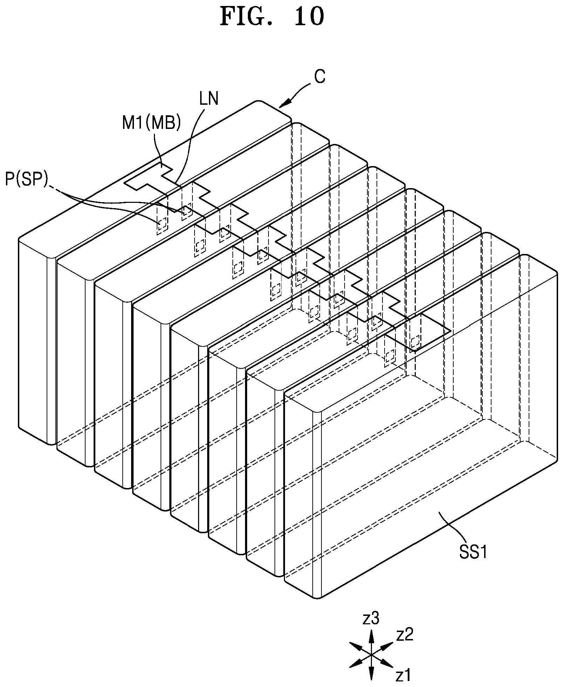

FIG. 10 is a view for describing a battery pack according to a modified embodiment of FIG. 1. Referring to FIG. 10, the battery pack may include the first measurement circuit unit M1 including the first type temperature measurement element P provided between the wide side surfaces SS1 of the neighboring battery cells C, which face each other, in the first direction Z1 in which the battery cells C are arranged. The first measurement circuit unit M1 may be formed by separating a measurement portion SP where the first type temperature measurement element P (or the pair of first type temperature measurement elements P) is arranged from a body portion MB of the first measurement circuit unit M1 through a cut line LN, and then arranging the measurement portion SP separated from the body portion MB of the first measurement circuit unit M1 between the wide side surfaces SS1 of the neighboring battery cells C.

The battery pack of FIG. 10 may include the battery cell C having a flexible pouch shape, and in this case, the first measurement circuit unit M1 may be stably located between the wide side surfaces SS1 of the battery cells C, which occupy relatively large areas. According to one or more embodiments, like the first measurement circuit unit M1, the second measurement circuit unit M2 may include the measurement portion SP separated from the body portion MB through the cut line LN, and may be formed by providing the measurement portion SP between the neighboring battery cells C arranged in the first direction Z1.

Referring to FIGS. 1 and 2, according to one or more embodiments, the measurement circuit unit M including the first type temperature measurement element P and the second type temperature measurement element N may extend across the electrode surface U of the battery cell C in the first direction Z1. According to one or more embodiments, the measurement circuit unit M may extend across the wide side surface SS1, the narrow side surface SS2, or the bottom surface B, in addition to the electrode surface U of the battery cell C, and may be arranged to surround at least two of the electrode surface U, the wide side surface SS1, the narrow side surface SS2, or the bottom surface B of the battery cell C.

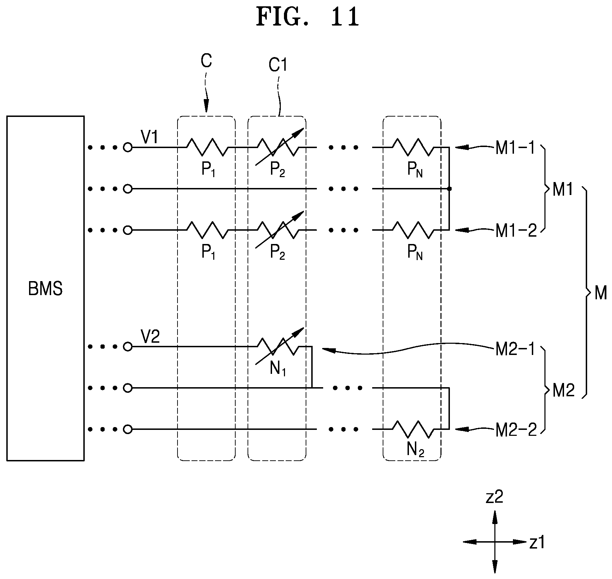

FIG. 11 is a view illustrating a connection state of the first measurement circuit unit M1 and the second measurement circuit unit M2. Referring to FIG. 11, the battery pack according to one or more embodiments may further include the battery management system BMS connected to both ends of the first measurement circuit unit M1 and the second measurement circuit unit M2 to determine an abnormal temperature or overheating of one of the battery cells C within the battery pack, based on outputs of the first measurement circuit unit M1 and the second measurement circuit unit M2. The determination of the abnormality or overheating of one of the cells C within the battery pack is determined by the determination of the abnormality or overhearing of the a cell stack including a plurality of cells, rather than measuring abnormal temperatures of individual cells. As a result, an inexpensive detection circuit may be used by reducing the number of components within a sensing circuit, but which still accurately detects whether a battery pack includes an abnormal cell.

The first measurement circuit unit M1 may include the pair of first measurement circuit units M1 (e.g., the (1-1)<sup>th</sup> measurement circuit unit M1-1 and (1-2)<sup>th</sup> measurement circuit unit M1-2) connected to each other in parallel with respect to the battery management system BMS, and similarly, the second measurement circuit unit M2 may include the pair of second measurement circuit units M2 (e.g., the (2-1)<sup>th</sup> measurement circuit unit M2-1 and (2-2)<sup>th</sup> measurement circuit unit M2-2) connected to each other in parallel with respect to the battery management system BMS. Here, each of the pair of first measurement circuit units M1 may include the plurality of first type temperature measurement elements P (e.g., first type temperature measurement elements $P_1$ to $P_N$) connected to each other in series in the first direction Z1 in which the battery cells C are arranged, and the pair of second measurement circuit units M2 may respectively include single second type temperature measurement elements N (e.g., second type temperature measurement elements $N_1$ and $N_2$). According to one or more embodiments, an output of the first measurement circuit unit M1 may be used to calculate a first measurement value V1 including a resistance change increased according to overheating, through the first type temperature measurement element $P_2$ allocated to an overheated battery cell C1 from among the first type temperature measurement elements P connected in series. On the other hand, an output of the second measurement circuit unit M2 may be used to calculate a second measurement value V2 including a resistance change decreased according to overheating, through the second type temperature measurement element $N_1$ corresponding to the overheated battery cell C1 according to measurement locations of the second type temperature measurement elements N included in the second measurement circuit units M2, or calculate the second measurement value V2 that does not include the resistance change according to overheating, through the second type temperature measurement element $N_2$ free from the overheated battery cell C1.

According to one or more embodiments, overheating of one of the battery cells C is determined from a difference value V1-V2 between the first measurement value V1 and the second measurement value V2 of the first measurement circuit unit M1 and the second measurement circuit unit M2, and in this case, by determining whether one of the battery cells C is overheated by using an absolute value of the difference value V1-V2 between the first measurement value V1 and the second measurement value V2 of the first measurement circuit unit M1 and the second measurement circuit unit M2, the one of the battery cells C may be determined to be overheated i) when the first measurement value V1 is greater than the second measurement value V2 by an amount, i.e., when the difference value V1-V2 between the first measurement value V1 and the second measurement value V2 is greater than a threshold value (e.g., a pre-set threshold value), and ii) when the second measurement value V2 is greater than the first measurement value V1 by an amount, i.e., when a difference value V2-V1 between the second measurement value V2 and first measurement value V1 is greater than the threshold value (e.g., the pre-set threshold value).

In one or more embodiments, when the first measurement value V1 is greater than the second measurement value V2 by an amount, i.e., when the difference value V1-V2 between the first measurement value V1 and the second measurement value V2 is greater than the threshold value (e.g., the pre-set threshold value), the second type temperature measurement element N may be allocated to the overheated battery cell C1 or the battery cell C1 to which the second type temperature measurement element N is allocated is overheated. Here, the first type temperature measurement element P and the second type temperature measurement element N may both detect overheating of the battery cell C1, and due to increment of resistance of the first type temperature measurement element P and decrement of resistance of the second type temperature measurement element N caused by the overheating of the battery cell C1, the first measurement value V1 of the first measurement circuit unit M1 including the first type temperature measurement element P and the second measurement value V2 of the second measurement circuit unit M2 including the second type temperature measurement element N may satisfy a relationship of the first measurement value V1 being greater than the second measurement value V2. Also, when the difference value V1-V2 between the first measurement value V1 and the second measurement value V2 is equal to or greater than the threshold value (e.g., the pre-set threshold value), it may be determined that one of the battery cells C is overheated.

According to one or more embodiments, the first measurement value V1 detects the overheated battery cell C1 and a battery cell C that is not overheated together, whereas the second measurement value V2 mainly detects the overheated battery cell C1, and thus the decrement of resistance of the second type temperature measurement element N reflected to the second measurement value V2 is more noticeable than the increment of resistance of the first type temperature measurement element P reflected to the first measurement value V1. Accordingly, the difference value V1-V2 between the first measurement value V1 and the second measurement value V2 is increased, and one of the battery cells C is determined to be overheated when the difference value V1-V2 is equal to or greater than the threshold value (e.g., the pre-set threshold value).

According to one or more embodiments, because the first measurement value V1 is indicated as combined resistance of the first type temperature measurement elements P of the first measurement circuit unit M1, which are connected in series, the first measurement value V1 is determined as a first conversion measurement value. The second measurement value V2 compared to the first measurement value V1 is converted into a second conversion measurement value considering resistance of the second type temperature measurement element N together with the number of first type temperature measurement elements P (or the number of battery cells C). Then, a difference value between the first conversion measurement value and the second conversion measurement value may be compared with the threshold value (e.g., the pre-set threshold value).

The first conversion measurement value and the second conversion measurement value to be compared with the threshold value may be values obtained according to the number of all battery cells C, considering the number of all battery cells C. At this time, the first conversion measurement value includes resistance values of both the overheated battery cell C1 (e.g., the resistance increased due to overheating) and a battery cell C that is not overheated (e.g., no increase in resistance due to overheating), but for example, the second conversion measurement value may correspond to a value obtained by multiplying the resistance value of the overheated battery cell C1 (e.g., the resistance decreased due to overheating) by the number of battery cells C. Accordingly, the decrement of the second conversion measurement value is more noticeable than the increment of the first conversion measurement value, and thus the difference value between the first conversion measurement value and the second conversion measurement value may be increased due to overheating of the battery cell C1. As such, according to one or more embodiments, an overheating signal of the battery cell C1 may be amplified by using the first measurement value V1 and the second measurement value V2 or the first conversion measurement value and the second conversion measurement value considering the number of all battery cells C rather than outputs of the first type temperature measurement element P and the second type temperature measurement element N, and accordingly, overheating of the battery cell C1 may be detected without omission of the number of battery cells C.

In one or more embodiments, when the first measurement value V1 is less than the second measurement value V2, i.e., when the difference value V2-V1 between the second measurement value V2 and first measurement value V1 is greater than the threshold value (e.g., the pre-set threshold value), the second type temperature measurement element N may be outside a measurement location of the overheated battery cell C1 or a battery cell other than the battery cell C to which the second type temperature measurement element N is allocated is overheated. Here, the first measurement value V1 of the first type temperature measurement element P, which detected the increment of resistance of the overheated battery cell C1, and the second measurement value V2 which did not detect the decrement of resistance of the overheated battery cell C1 may satisfy a relationship of the first measurement value V1 being less than the second measurement value V2. Also, when the difference value V2-V1 between the first measurement value V1 and the second measurement value V2 is equal to or greater than the threshold value (e.g., the pre-set threshold value), it may be determined that one of the battery cells C is overheated.

According to one or more embodiments, even when the first measurement value V1 increases due to the overheated battery cell C1, the second measurement value V2 may not detect overheating of the battery cell C1 and thus may have relatively large resistance that is not decreased. Thus, the relationship of the first measurement value V1 that is less than the second measurement value V2 may be satisfied. As described above, according to one or more embodiments, the first conversion measurement value and the second conversion measurement value obtained by considering the number of all battery cells C included in the battery pack may be used considering a difference between the numbers of the first type temperature measurement element P and the second type temperature measurement element N. The first measurement value V1 of the first measurement circuit unit M1 including the same number of first type temperature measurement elements P as the all battery cells C may be used as the first conversion measurement value, and for example, the second conversion measurement value may be obtained by multiplying the second measurement value V2 of the second measurement circuit unit M2 including the single second type temperature measurement element N by the number of battery cells C. Here, the first conversion measurement value includes resistance values of both the overheated battery cell C1 (e.g., resistance increased due to overheating) and a battery cell C that is not overheated (e.g., no increase in resistance due to overheating), but for example, the second conversion measurement value may be represented by a value obtained by multiplying a resistance value of the battery cell C that is not overheated (e.g., no decrease in resistance due to overheating) by the number of battery cells C. Accordingly, the second conversion measurement value without decrease due to overheating of the battery cell C1 may be relatively noticeable compared to the first conversion measurement value to which the increment of the overheated battery cell C1 is reflected.

According to one or more embodiments, while determining whether one of the battery cells C is overheated, determining whether the first measurement value is equal to or greater than a trigger point corresponding to the inflection point CP of the first type temperature measurement element P may be performed before or after determining whether the one of the battery cells C is overheated based on the difference value V1-V2 between the first measurement value V1 and the second measurement value V2 or the difference value between the first conversion measurement value and the second conversion measurement value, to supplement the determination based on the difference value V1-V2. Also, an error of determining that the one of the battery cells C is overheated even when one of the battery cells C is not overheated may be prevented when the first measurement value V1 is less than the second measurement value V2, i.e., when the difference value V2-V1 between the second measurement value V2 and first measurement value V1 is greater than the threshold value (e.g., the pre-set threshold value).

According to one or more embodiments, calculating temperature information based on the first measurement value V1 and the second measurement value V2 or the first conversion measurement value and the second conversion measurement value may be further performed. Overheating may be supplementarily determined by using the temperature information. For example, determining overheating by using the temperature information may be performed before or after determining overheating based on the difference value V1-V2 between the first measurement value V1 and the second measurement value V2 or the difference value between the first conversion measurement value and the second conversion measurement value, to supplement the determination based on the difference value V1-V2. Also, an error of determining that one of the battery cells C is overheated even when the one of the battery cells C is not overheated may be prevented when the first measurement value V1 is less than the second measurement value V2, i.e., when the difference value V2-V1 between the second measurement value V2 and first measurement value V1 is greater than the threshold value (e.g., the pre-set threshold value).

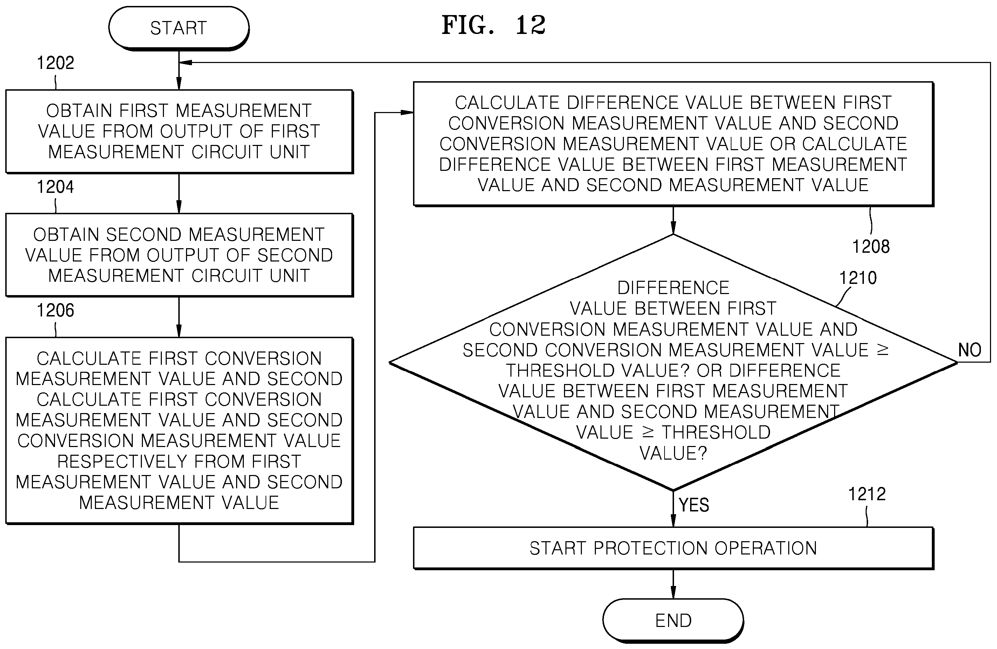

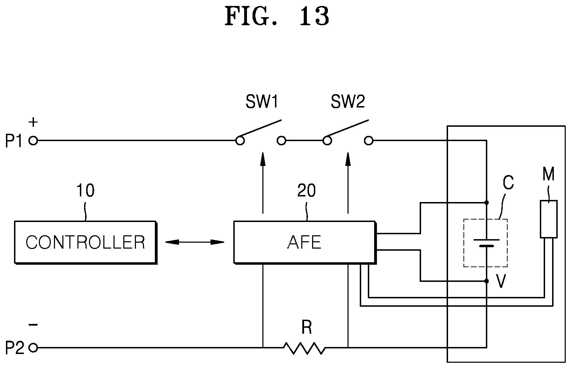

FIG. 12 is a flowchart for describing a method of controlling a battery pack, according to one or more embodiments. FIG. 13 is a diagram illustrating a schematic configuration of the battery management system BMS, according to one or more embodiments.

Hereinafter, a method of controlling a battery pack, according to one or more embodiments, will be described with reference to FIG. 12.

The method of controlling the battery pack, according to one or more embodiments, the battery pack including the battery cells C and the first measurement circuit unit M1 and the second measurement circuit unit M2 for measuring temperature information of the battery cells C and respectively including the first type temperature measurement element P and the second type temperature measurement element N having different characteristics of a resistance change according to a temperature change, may determine whether one of the battery cells C is overheated by using the difference value V1-V2 between the first measurement value V1 based on an output of the first measurement circuit unit M1 and the second measurement value V2 based on an output of the second measurement circuit unit M2.

According to one or more embodiments, an abnormal temperature or overheating of one of the battery cells C may be precisely detected by using the first measurement circuit unit M1 and the second measurement circuit unit M2 including the first type temperature measurement element P and the second type temperature measurement element N having different resistance characteristics.

According to one or more embodiments, in the first type temperature measurement element P, a profile of the resistance change according to the temperature change may display a nonlinear rapid change above the inflection point CP, and in the second type temperature measurement element N, a profile of the resistance change according to the temperature change may display a linear gradual change. According to one or more embodiments, it is determined whether the first measurement value V1 is equal to or greater than the trigger point corresponding to the inflection point CP of the first type temperature measurement element P, and when the first measurement value V1 is equal to or greater than the trigger point and the second measurement value V2 is equal to or greater than a threshold value, one of the battery cells C may be determined to be overheated.

According to one or more embodiments, the difference value V1-V2 calculated from the first measurement value V1 from the first measurement circuit unit M1 including the first type temperature measurement element P and the second measurement value V2 from the second measurement circuit unit M2 is compared with the threshold value, and an abnormal temperature or overheating of one of the battery cells C may be determined based on a result of the comparing. Hereinafter, determination on overheating of one of the battery cells C according to comparison of the difference value V1-V2 between the first measurement value V1 and the second measurement value V2 with the threshold value will be described in detail.

The method of controlling the battery pack, according to one or more embodiments, may be performed under control by the battery management system BMS or a controller 10 of FIG. 13 configured to control overall operations of the battery management system BMS. A schematic configuration of the battery management system BMS will be described below with reference to FIG. 13.

According to one or more embodiments, at 1202 the first measurement value V1 may be obtained from the output of the first measurement circuit unit M1, and may correspond to resistance of the first measurement circuit unit M1 or resistance of the first type temperature measurement element P included in the first measurement circuit unit M1, or correspond to a voltage drop of the first measurement circuit unit M1. Similarly, at 1204 the second measurement value V2 may be obtained from the output of the second measurement circuit unit M2, and may correspond to resistance of the second measurement circuit unit M2 or resistance of the second type temperature measurement element N included in the second measurement circuit unit M2, or correspond to a voltage drop of the second measurement circuit unit M2.

The controller 10 of FIG. 13 may calculate the first measurement value V1 from the output of the first measurement circuit unit M1, and similarly, calculate the second measurement value V2 from the output of the second measurement circuit unit M2. Also, the controller 10 of FIG. 13 may calculate the first conversion measurement value from the first measurement value V1 and similarly, calculate the second conversion measurement value from the second measurement value V2.

According to a configuration of the measurement circuit unit M, according to one or more embodiments, at 1206 the controller 10 of FIG. 13 may calculate the first measurement value V1 and the second measurement value V2, and the first conversion measurement value and the second conversion measurement value via different methods. In the configuration of measurement circuit unit M shown in FIG. 6, the controller 10 of FIG. 13 may calculate, as the first measurement value V1, the combined resistance obtained by combining resistances of the plurality of first type temperature measurement elements P connected to each other in series between both ends of the first measurement circuit unit M1, and calculate, as the second measurement value V2, resistance of the second type temperature measurement element N connected between both ends of the second measurement circuit unit M2. Here, the controller 10 of FIG. 13 may perform a following calculation process by using the first measurement value V1 as the first conversion measurement value, and calculate the second conversion measurement value through separate conversion for the second measurement value V2. In detail, the first conversion measurement value corresponds to the combined resistance obtained by combining the resistances of the plurality of first type temperature measurement elements P connected to each other in series between both ends of the first measurement circuit unit M1, and thus the second conversion measurement value may also be calculated as combined resistance obtained by combining resistances of the same number of second type temperature measurement elements N as the first type temperature measurement elements P. In more detail, the controller 10 of FIG. 13 may calculate the second conversion measurement value by multiplying the resistance (e.g., a representative value described below) of the single second type temperature measurement element N connected between both ends of the second measurement circuit unit M2 by the number of first type temperature measurement elements P.

According to one or more embodiments, there may be two or more second measurement circuit units M2, and different second measurement values V2 may be obtained based on outputs of the different second type temperature measurement elements N included in the different second measurement circuit units M2. One second measurement value V2 selected from the different second measurement values V2, for example, the second measurement value V2 having the largest value, may be used as a representative value, and the second conversion measurement value may be calculated by multiplying the representative value by the number of first type temperature measurement elements P. According to one or more embodiments, the controller 10 of FIG. 13 may use an average value of the different second measurement values V2 as a representative value and calculate the second conversion measurement value by multiplying the representative value by the number of first type temperature measurement elements P.

According to one or more embodiments, the number of first type temperature measurement elements P connected to each other between both ends of the first measurement circuit unit M1 may be the same as the number of all battery cells C arranged in the first direction Z1, and for example, the first type temperature measurement elements P may be respectively allocated to the battery cells C arranged in the first direction Z1. In such a configuration, the controller 10 of FIG. 13 may obtain the second conversion measurement value by multiplying a representative value obtained from the resistances of the second type temperature measurement elements N by the number of battery cells C instead of the number of first type temperature measurement elements P. According to one or more embodiments, the first measurement circuit unit M1 may include the pair of first measurement circuit units M1 (e.g., M1-1 and M1-2) each including the same number of first type temperature measurement elements P as the battery cells C so as to provide redundancy against disconnection. Here, the number of first type temperature measurement elements P may denote the number of battery cells C or the number of first type temperature measurement elements P included in each first measurement circuit unit M1, the number of first type temperature measurement elements P included in the pair of first measurement circuit units M1 (e.g., M1-1 and M1-2) may denote a multiple of the number of battery cells C, and the number of first type temperature measurement elements P included in the pair of first measurement circuit units M1 may not be considered while calculating the second conversion measurement value.

In the configuration of measurement circuit unit M shown in FIG. 7, the controller 10 of FIG. 13 may calculate, as the first measurement value V1, total combined resistance obtained by combining a first combined resistance, in which resistances of the plurality of first type temperature measurement elements P connected to each other in series between both ends of the first measurement circuit unit M1 (e.g., the (1-1)th measurement circuit unit M1-1) are combined, with a second combined resistance, in which resistances of the plurality of first type temperature measurement elements P connected to each other in series between both ends of another first measurement circuit unit M1 (e.g., the (1-2)th measurement circuit unit M1-2) are combined. Also, the controller 10 of FIG. 13 may calculate, as the second measurement value V2, the resistance of the second type temperature measurement element N connected between the both ends of the second measurement circuit unit M2. Here, the controller 10 of FIG. 13 may perform the following calculation process by using the first measurement value V1 as the first conversion measurement value, and calculate the second conversion measurement value through separate conversion for the second measurement value V2. In detail, the first conversion measurement value corresponds to the total combined resistance obtained by combining the first combined resistance, in which the resistances of the plurality of first type temperature measurement elements P connected to each other in series between both ends of the first measurement circuit unit M1 are combined, with the second combined resistance, in which the resistances of the plurality of first type temperature measurement elements P connected to each other in series between both ends of the other first measurement circuit unit M1 are combined, and thus the second conversion measurement value may also be calculated as combined resistance obtained by combining resistances of the same number of second type temperature measurement elements N as the first type temperature measurement elements P. In more detail, the controller 10 of FIG. 13 may calculate the second conversion measurement value by multiplying the resistance (e.g., the representative value described below) of the single second type temperature measurement element N connected between both ends of the second measurement circuit unit M2 by the number of first type temperature measurement elements P.

Regarding the number of first type temperature measurement elements P for calculating the second conversion measurement value, the first measurement circuit unit M1 may include the pair of different first measurement circuit unit M1 so as to provide redundancy against disconnection. The first measurement circuit unit M1 may include the (1-1)$^{th}$ measurement circuit unit M1-1 including the plurality of first type temperature measurement elements P allocated to the front battery cells C in the first direction Z1, and the (1-2)$^{th}$ measurement circuit unit M1-2 including the plurality of first type temperature measurement elements P allocated to the rear battery cells C in the first direction Z1. The number of first type temperature measurement elements P may correspond to a number obtained by adding the number of first type temperature measurement elements P included in the (1-1)$^{th}$ measurement circuit unit M1-1 and the number of first type temperature measurement elements P included in the (1-2)$^{th}$ measurement circuit unit M1-2. According to one or more embodiments, the same number of first type temperature measurement elements P as the battery cells C arranged in the first direction Z1 may be provided, and the first type temperature measurement elements P may be respectively allocated to the battery cells C arranged in the first direction Z1. For example, the battery cells C arranged in the first direction Z1 may be halved, and the first type temperature measurement elements P of the (1-1)$^{th}$ measurement circuit unit M1-1 may be allocated to the front half of the battery cells C and the first type temperature measurement elements P of the (1-2)$^{th}$ measurement circuit unit M1-2 may be allocated to the rear half of the battery cells C. Here, the total number of first type temperature measurement elements P may be the same as the number of battery cells C, and may correspond to the number obtained by adding the numbers of first type temperature measurement elements P included in the (1-1)$^{th}$ measurement circuit unit M1-1 and (1-2)$^{th}$ measurement circuit unit M1-2.

Regarding a representative value of the second type temperature measurement elements N for calculating the second conversion measurement value, there may be two or more second measurement circuit unit M2, and one second measurement value V2 selected from among the different second measurement values V2, for example, the second measurement value V2 having a largest value, may be used as the representative value, and the second conversion measurement value may be calculated by multiplying the representative value by the number of first type temperature measurement elements P. According to one or more embodiments, the controller 10 of FIG. 13 may use an average value of the different second measurement values V2 as a representative value and calculate the second conversion measurement value.

As will be described below, according to one or more embodiments, an abnormal temperature or overheating of one of the battery cells C of a battery pack may be sensed based on a difference value between the first conversion measurement value and the second conversion measurement value. According to one or more embodiments, the number of first type temperature measurement elements P and the number of second type temperature measurement elements N may be the same, and the first type temperature measurement elements P connected between both ends of the first measurement circuit unit M1 and the second type temperature measurement elements N connected between both ends of the second measurement circuit unit M2 may be connected in various manners, such as in series and in parallel. Thus, according to one or more embodiments, the difference value between the first conversion measurement value and the second conversion measurement value may be comprehensively represented as the difference value V1-V2 between the first measurement value V1 and the second measurement value V2. In the present specification, the difference value between the first conversion measurement value and the second conversion measurement value includes a meaning of matching the numbers of first type temperature measurement element P and the second type temperature measurement element N to be the same, and more broadly, may be represented by the difference value V1-V2 between the first measurement value V1 and the second measurement value V2. Hereinafter, to prevent confusion before and after conversion, the difference value between the first conversion measurement value and the second conversion measurement value is described instead of the difference value V1-V2 between the first measurement value V1 and the second measurement value V2, but more broadly, the difference value between the first conversion measurement value and the second conversion measurement value may be comprehensively represented by the difference value V1-V2 between the first measurement value V1 and the second measurement value V2. For reference, according to one or more embodiments, the difference value between the first conversion measurement value and the second conversion measurement value or the difference value V1-V2 between the first measurement value V1 and the second measurement value V2 may be considered only quantitatively and positive(+)/negative(-) thereof may not be referred to. In this regard, the difference value may be represented by an absolute value of the difference value between the first conversion measurement value and the second conversion measurement value, and the controller 10 of FIG. 13 may define the difference value as data having only a size without a sign or convert the difference value into an absolute value through a function, and compare the difference value with a threshold value as described below.

Referring to FIG. 11, according to one or more embodiments, overheating of the battery cell C is determined from the difference value V1-V2 between the first measurement value V1 and the second measurement value V2 of the first measurement circuit unit M1 and the second measurement circuit unit M2, and in this case, by determining whether one of the battery cells C is overheated by using the absolute value of the difference value V1-V2 between the first measurement value V1 and the second measurement value V2 of the first measurement circuit unit M1 and the second measurement circuit unit M2, one of the battery cells C may be determined to be overheated i) when the first measurement value V1 is greater than the second measurement value V2 by an amount, i.e., when the difference value V1-V2 between the first measurement value V1 and the second measurement value V2 is greater than the threshold value (e.g., the pre-set threshold value), and ii) when the second measurement value V2 is greater than the first measurement value V1 by an amount, i.e., when the difference value V2-V1 between the second measurement value V2 and first measurement value V1 is greater than the threshold value (e.g., the pre-set threshold value).

In one or more embodiments, when the first measurement value V1 is greater than the second measurement value V2, i.e., when the difference value V1-V2 between the first measurement value V1 and the second measurement value V2 is greater than the threshold value (e.g., the pre-set threshold value), the second type temperature measurement element N may be allocated to the overheated battery cell C1 or the battery cell C1 to which the second type temperature measurement element N is allocated is overheated. Here, the first type temperature measurement element P and the second type temperature measurement element N may both detect overheating of the battery cell C1, and due to the increment of resistance of the first type temperature measurement element P and the decrement of resistance of the second type temperature measurement element N caused by the overheating of the battery cell C1, the first measurement value V1 of the first measurement circuit unit M1 including the first type temperature measurement element P and the second measurement value V2 of the second measurement circuit unit M2 including the second type temperature measurement element N may satisfy the relationship of the first measurement value V1 being greater than the second measurement value V2. Also, when the difference value V1-V2 between the first measurement value V1 and the second measurement value V2 is equal to or greater than the threshold value (e.g., the pre-set threshold value), it may be determined that one of the battery cells C is overheated.

According to one or more embodiments, the first measurement value V1 detects the overheated battery cell C1 and a battery cell C that is not overheated together, whereas the second measurement value V2 mainly detects the overheated battery cell C1, and thus the decrement of resistance of the second type temperature measurement element N reflected to the second measurement value V2 is more noticeable than the increment of resistance of the first type temperature measurement element P reflected to the first measurement value V1. Accordingly, the difference value V1-V2 between the first measurement value V1 and the second measurement value V2 is increased, and one of the battery cells C is determined to be overheated when the difference value V1-V2 is equal to or greater than the threshold value (e.g., the pre-set threshold value).

According to one or more embodiments, because the first measurement value V1 is indicated as the combined resistance of the first type temperature measurement elements P of the first measurement circuit unit M1, which are connected in series, the first measurement value V1 is determined as the first conversion measurement value. The second measurement value V2 compared with the first measurement value V1 is converted into the second conversion measurement value considering the resistance of the second type temperature measurement element N together with the number of first type temperature measurement elements P (or the number of battery cells C). Then, the difference value between the first conversion measurement value and the second conversion measurement value may be compared with the threshold value.

The first conversion measurement value and the second conversion measurement value to be compared with the threshold value may be values obtained according to the number of all battery cells C, considering the number of all battery cells C. At this time, the first conversion measurement value includes resistance values of both the overheated battery cell C1 (e.g., resistance increased due to overheating) and a battery cell C that is not overheated (e.g., no increase in resistance due to overheating), but for example, the second conversion measurement value may correspond to a value obtained by multiplying the resistance value of the overheated battery cell C1 (e.g., resistance decreased due to overheating) by the number of battery cells C. Accordingly, the decrement of the second conversion measurement value is more noticeable than the increment of the first conversion measurement value, and thus the difference value between the first conversion measurement value and the second conversion measurement value may be increased due to overheating of one of the battery cells C. As such, according to one or more embodiments, an overheating signal of the battery cell C may be amplified by using the first measurement value V1 and the second measurement value V2 or the first conversion measurement value and the second conversion measurement value considering the number of all battery cells C rather than outputs of the first type temperature measurement element P and the second type temperature measurement element N, and accordingly, overheating of the battery cell C may be detected without omission.

In one or more embodiments, when the first measurement value V1 is less than the second measurement value V2, i.e., when the difference value V2-V1 between the second measurement value V2 and first measurement value V1 is greater than the threshold value (e.g., the pre-set threshold value), the second type temperature measurement element N may be outside a measurement location of the overheated battery cell C1 or the battery cell C other than the battery cell C to which the second type temperature measurement element N is allocated is overheated. Here, the first measurement value V1 of the first type temperature measurement element P, which detected the increment of resistance of the overheated battery cell C1, and the second measurement value V2, which did not detect the decrement of resistance of the overheated battery cell C1 may satisfy the relationship of the first measurement value V1 being less than the second measurement value V2. Also, when the difference value V2-V1 between the first measurement value V1 and the second measurement value V2 is equal to or greater than the threshold value (e.g., the pre-set threshold value), it may be determined that one of the battery cells C is overheated.

According to one or more embodiments, even when the first measurement value V1 increases due to the overheated battery cell C1, the second measurement value V2 may not detect overheating of the battery cell C1 and thus may have relatively large resistance that is not decreased. Thus, the relationship of the first measurement value V1 being less than the second measurement value V2 may be satisfied. As described above, according to one or more embodiments, the first conversion measurement value and the second conversion measurement value obtained by considering the number of all battery cells C included in the battery pack may be used considering the difference between the numbers of the first type temperature measurement element P and the second type temperature measurement element N. The first measurement value V1 of the first measurement circuit unit M1 including the same number of first type temperature measurement elements P as the all battery cells C may be used as the first conversion measurement value, and for example, the second conversion measurement value may be obtained by multiplying the second measurement value V2 of the second measurement circuit unit M2 including the single second type temperature measurement element N by the number of battery cells C. Here, the first conversion measurement value includes resistance values of both the overheated battery cell C1 (e.g., resistance increased due to overheating) and a battery cell C that is not overheated (e.g., no increase in resistance due to overheating), but for example, the second conversion measurement value may be represented by a value obtained by multiplying a resistance value of the battery cell C that is not overheated (e.g., no decrease in resistance due to overheating) by the number of battery cells C. Accordingly, the second conversion measurement value without decrease due to overheating of the battery cell C may be relatively noticeable compared to the first conversion measurement value to which the increment of the overheated battery cell C1 is reflected.

According to one or more embodiments, while determining whether the battery cell C is overheated, determining whether the first measurement value is equal to or greater than the trigger point corresponding to the inflection point CP of the first type temperature measurement element P may be performed before or after determining whether one of the battery cells C is overheated based on the difference value V1-V2 between the first measurement value V1 and the second measurement value V2 or the difference value between the first conversion measurement value and the second conversion measurement value, to supplement the determination based on the difference value V1-V2. Also, an error of determining that one of the battery cells C is overheated even when one of the battery cells C is not overheated may be prevented for example, when the first measurement value V1 is less than the second measurement value V2, i.e., when the difference value V2-V1 between the second measurement value V2 and first measurement value V1 is greater than the threshold value (e.g., the pre-set threshold value).

According to one or more embodiments, calculating temperature information based on the first measurement value V1 and the second measurement value V2 or the first conversion measurement value and the second conversion measurement value may be further performed. Overheating may be supplementarily determined by using the temperature information. For example, determining overheating by using the temperature information may be performed before or after determining overheating based on the difference value V1-V2 between the first measurement value V1 and the second measurement value V2 or the difference value between the first conversion measurement value and the second conversion measurement value, to supplement the determination based on the difference value V1-V2. Also, an error of determining that one of the battery cells C is overheated even when one of the battery cells C is not overheated may be prevented when the first measurement value V1 is less than the second measurement value V2, i.e., when the difference value V2-V1 between the second measurement value V2 and first measurement value V1 is greater than the threshold value (e.g., the pre-set threshold value).

According to one or more embodiments, the threshold value may be set as below. The threshold value is a value to be compared with the difference value V1-V2 between the first measurement value V1 and the second measurement value V2 or with the difference value between the first conversion measurement value and the second conversion measurement value, and for example, may be set to a difference value between first temperature data calculated from resistance of one group of first type temperature measurement elements P indicated by the first conversion measurement value and second temperature data calculated from resistance of one group of second type temperature measurement elements N indicated by the second conversion measurement value.

The one group of first type temperature measurement elements P may denote the number of first type temperature measurement elements P corresponding to a calculation basis of the first conversion measurement value, and according to one or more embodiments, may denote the plurality of first type temperature measurement elements P included in the first measurement circuit unit M1. The one group of second type temperature measurement elements N may denote the number of second type temperature measurement elements N corresponding to a calculation basis of the second conversion measurement value, and according to one or more embodiments, may denote the same number of second type temperature measurement elements N as the plurality of first type temperature measurement elements P included in the first measurement circuit unit M1.

The first temperature data is temperature data calculated from the resistance of the one group of first type temperature measurement elements P. The first temperature data is a quantitative parameter collectively defining temperatures of the plurality of battery cells C constituting the battery pack rather than a temperature of individual battery cell C calculated from individual first type temperature measurement element P, and may denote temperature data calculated collectively from resistances of the one group of first type temperature measurement elements P rather than a qualitative temperature.

Similarly, the second temperature data is temperature data calculated from the resistance of the one group of second type temperature measurement elements N. The second temperature data is a quantitative parameter collectively defining temperatures of the plurality of battery cells C constituting the battery pack rather than a temperature of individual battery cell C calculated from individual second type temperature measurement element N, and may denote temperature data calculated collectively from resistances of the one group of second type temperature measurement elements N rather than a qualitative temperature.

For example, according to one or more embodiments, the first temperature data and the second temperature data do not denote qualitative temperature information of individual battery cell C, but collectively define temperature information of the plurality of battery cells C, and may be parameters that include the temperature information of the plurality of battery cells C but are on different levels from the temperature information. For example, the first temperature data and the second temperature data may be understood as temperature information output from behaviors of the first type temperature measurement element P and the second type temperature measurement element N of FIGS. 4 and 5 by using, as an input, collective resistances of the groups of first type temperature measurement element P and second type temperature measurement element N. Here, because the first temperature data and the second temperature data use, as the input, the collective resistances of the groups of first type temperature measurement element P and second type temperature measurement element N instead of resistance of individual first type temperature measurement element P and second type temperature measurement element N, the first temperature data and the second temperature data output by using, as the input, the collective resistances of the groups of first type temperature measurement element P and second type temperature measurement element N may be different from a temperature of individual battery cell C.

According to one or more embodiments, the first temperature data and the second temperature data are based on the behaviors of the first type temperature measurement element P and the second type temperature measurement element N as shown in FIGS. 4 and 5, output resistances of the first type temperature measurement element P and the second type temperature measurement element N by using a reference temperature for determining overheating as an input, and may be defined by the output resistances of the first type temperature measurement element P and the second type temperature measurement element N and the numbers of groups of first type temperature measurement element P and second type temperature measurement element N that are basis of the first conversion measurement value and the second conversion measurement value, respectively. The difference value between the first temperature data and the second temperature data calculated as such may be a threshold value (e.g., a pre-set as the threshold value).

According to one or more embodiments, the first temperature data and the second temperature data may be in units of resistance, or may be in units of temperature output from resistance based on the behaviors of the first type temperature measurement element P and the second type temperature measurement element N shown in FIGS. 4 and 5. For example, when the threshold value is in units of temperature, according to one or more embodiments, the first conversion measurement value and the second conversion measurement value that are to be compared with the threshold value may also be in units of temperature. For example, the first conversion measurement value and the second conversion measurement value may respectively correspond to values obtained by outputting temperatures of the first type temperature measurement element P and the second type temperature measurement element N shown in FIGS. 4 and 5, by using resistance of the group of first type temperature measurement elements P and resistance of the group of second type temperature measurement element N as inputs.

According to one or more embodiments, an abnormal temperature or overheating of one of the battery cells C may be determined based on the threshold value by detecting a case where a temperature difference between a first temperature based on the resistance of the first type temperature measurement element P and a second temperature based on the resistance of the second type temperature measurement element N is between 10°C to 15°C (e.g., a difference between the first temperature and the second temperature is a temperature set between 10°C to 15°C). In other words, the first temperature data and the second temperature data are calculated from the resistances of the first type temperature measurement element P and the second type temperature measurement element N at a time when the temperature difference between the first temperature based on the resistance of the first type temperature measurement element P and the second temperature based on the resistance of the second type temperature measurement element N is a temperature between 10°C and 15°C, and a difference value between the first temperature data and the second temperature data may be set as the threshold value.

Referring to FIGS. 4 and 5, a difference value between the first conversion measurement value based on the first type temperature measurement element P, in which the resistance change according to the temperature change displays a positive characteristic, and the second conversion measurement value based on the second type temperature measurement element N, in which the resistance change according to the temperature change displays a negative characteristic, increases according to an increase in temperature, and thus when the difference value increases by a certain value or more, one of the battery cells C may be determined to have an abnormal temperature or to be overheated. Here, regarding the threshold value for determining an abnormal temperature or overheating of one of the battery cells C, the first temperature data and the second temperature data may be calculated from the resistances of the group of first type temperature measurement element P and group of second type temperature measurement element N at a time when the temperature difference between the first temperature based on the resistance of the first type temperature measurement element P and the second temperature based on the resistance of the second type temperature measurement element N is a temperature between 10°C and 15°C, and the difference value between the first temperature data and the second temperature data may be set as the threshold value.

Another aspect of setting the threshold value is as follows. Referring to FIGS. 4 and 5, a resistance characteristic of the first type temperature measurement element P rapidly increases according to the temperature change in a high temperature section, and thus an error may occur in temperature measurement. Such an error in temperature measurement may gradually increase according to the increase in temperature. To compensate for such a resistance characteristic of the first type temperature measurement element P, the second type temperature measurement element N is applied (or connected) in parallel together with the first type temperature measurement element P, the first temperature data and the second temperature data may be calculated from the resistances of the group of first type temperature measurement element P and group of second type temperature measurement element N at a time when the temperature difference between the first temperature based on the resistance of the first type temperature measurement element P and the second temperature based on the resistance of the second type temperature measurement element N is a temperature between 10°C and 15°C, and the difference value between the first temperature data and the second temperature data may be set as the threshold value.

According to one or more embodiments, it is determined that a threshold condition is satisfied when the temperature difference between the first temperature and second temperature corresponds to a temperature pre-set between 10°C and 15°C, for example, it is determined that the threshold condition is satisfied when the temperature difference between the first temperature and second temperature is 10°C from among 10°C to 15°C. In one or more embodiments, a case where the temperature difference between the first temperature and second temperature is 10°C may be set as the threshold condition or threshold value for early detection of an abnormal temperature or overheating of one of the battery cells C. However, according to one or more embodiments, a case where the temperature difference between the first temperature and second temperature is, for example, 15°C may be set as the threshold condition or threshold value considering an increase in temperature in a situation such as high-speed charging of the battery cell C.

According to one or more embodiments, the measurement circuit unit M may be electrically connected to the battery management system BMS. For example, the terminal Me of FIGS. 6 and 7 provided at one end of the measurement circuit unit M may be connected to a connector of the battery management system BMS. Referring to FIG. 13, the battery management system BMS may include the controller 10 configured to control overall operations of the battery management system BMS, and an analog front end (AFE) 20 connected to the measurement circuit unit M to receive an output of the measurement circuit unit M, convert an output regarding temperature information received from the measurement circuit unit M into a quantized digital value, transmit the same to the controller 10, and output an on/off control signal for a charging switch SW2 and a discharging switch SW1, according to a control signal of the controller 10. The battery management system BMS may receive information about a temperature and a voltage through a voltage measurement terminal V and measurement circuit unit M arranged at a location adjacent to the battery cell C. A current sensor R is provided on charging and discharging paths of the battery cell C to measure charging and discharging current amounts of the battery cell C.

According to one or more embodiments, as described above and also per 1208 of FIG. 12, the controller 10 may calculate the difference value V1-V2 between the first measurement value V1 and the second measurement value V2 based on outputs of the first measurement circuit unit M1 and the second measurement circuit unit M2. Further, per 1210 of FIG. 12, the controller 10 may compare the calculated difference value V1-V2 with the threshold value (e.g., the pre-set threshold value), thereby detecting an abnormal temperature or overheating of one of the battery cells C based on a result of the comparing. Upon detecting that one of the battery cells C of the battery pack is overheated, per 1212 of FIG. 12, the controller 10 may start a protection operation for stopping charging and discharging operations of each of the battery cells C of the battery pack by outputting an off signal for the charging switch SW2 and/or the discharging switch SW1, and accordingly, prevent an accident, such as an explosion or ignition, leading from the overheating of the battery cell C.

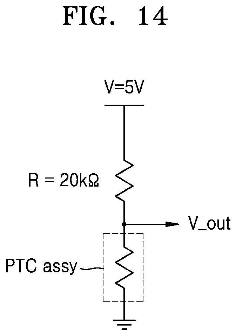

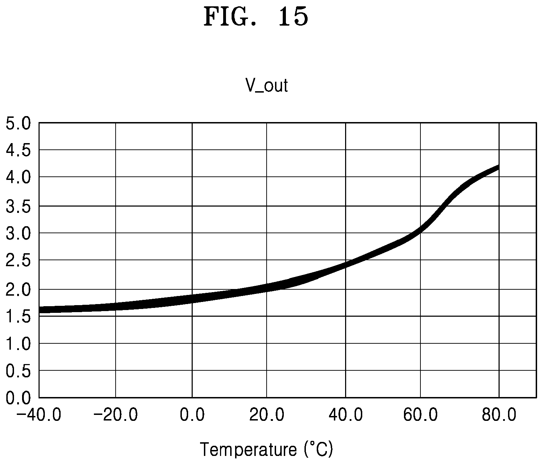

FIGS. 14 and 15 are diagrams for describing a method of determining whether one of the battery cells C is overheated by using a voltage value for combined resistance of a first type temperature measurement element, according to one or more embodiments.

Referring to FIG. 14, a measurement circuit for measuring a voltage value V_out for combined resistance PTC assy (i.e. PTC assembly) of the first type temperature measurement element P according to one or more embodiments is illustrated. For example, the measurement circuit for measuring the voltage value V_out for the combined resistance PTC assy of the first type temperature measurement element P may be included in the first measurement circuit unit M1.

The battery management unit according to one or more embodiments may determine whether the battery cell is overheated based on a first voltage measurement value for the combined resistance PTC assy of the first type temperature measurement element P measured from the first measurement circuit unit M1.

For example, as shown in FIG. 14, 5V of the measurement circuit that is VCC of the measurement circuit and 20 kohm that is pull-up resistance may be set to be the same as a value of the combined resistance PTC assy of the first type temperature measurement element P to meet a median value of 2.5 V in a voltage divider rule.

For example, as shown in FIG. 15, the battery management unit according to one or more embodiments may determine whether the battery cell is overheated based on the first voltage measurement value for the combined resistance PTC assy of the first type temperature measurement element P by using a temperature voltage profile of the first type temperature measurement element P. For example, the battery management unit may calculate a temperature value based on the first voltage measurement value for the combined resistance PTC assy of the first type temperature measurement element P, and may determine whether one of the battery cells is overheated by comparing the calculated temperature value of the first type temperature measurement element P with a temperature value of the second type temperature measurement element N. That is, when the temperature value of the second type temperature measurement element N is set to a reference temperature and the temperature lattice value of the first type temperature measurement element P is equal to or higher than the temperature value of the second type temperature measurement element N, the battery management unit may detect overheating of one of the battery cells. Also, the battery management unit may take measures such as an alarm or a protection circuit operation when the overheating of the battery cell is detected.

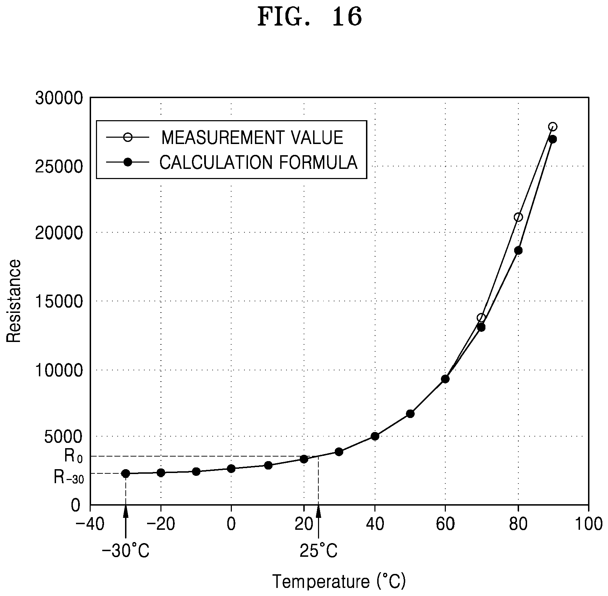

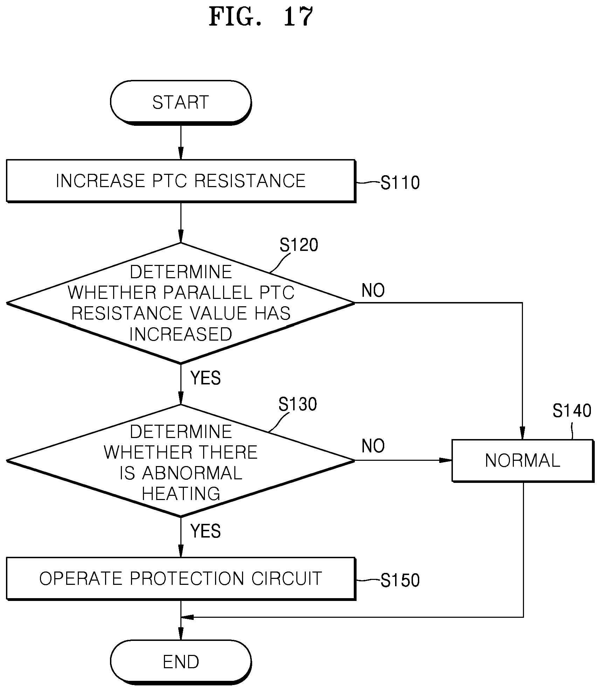

FIG. 16 is a diagram for describing whether a battery cell is overheated by using a resistance calculation formula and a resistance profile according to a temperature of the first type temperature measurement element P, according to one or more embodiments. Also, FIG. 17 is a flowchart for describing a method of controlling a battery pack, according to another embedment.

The battery management unit according to one or more embodiments may calculate a resistance prediction value by substituting a temperature value of the second type temperature measurement element N measured based on a measurement value of the second measurement circuit unit M2 into a resistance calculation formula of Equation 1 derived based on a resistance profile according to a temperature of the first type temperature measurement element P.

Also, the battery management unit according to an embodiment may calculate a resistance measurement value based on a first voltage measurement value for combined resistance of the first type temperature measurement element P measured from the first measurement circuit unit M1.

Also, the battery management unit according to one or more embodiments may determine whether one of the battery cells is overheated based on the resistance prediction value and the resistance measurement value.

For example, in a graph of FIG. 16, a measurement value graph may represent a resistance profile according to a temperature of the first type temperature measurement element P. Also, a calculation formula graph may represent a resistance value according to a temperature by a resistance calculation formula of Equation 1.

Equation 1

$$R = R_0 e^{\beta\left(\frac{1}{(\alpha T + 273)} - \frac{1}{T_0 + 273}\right)} + R_{-30}$$

$R$ : Resistance in ambient temperature $T$ (°C) (°C: Celsius temperature)

$R_0$ : Resistance in ambient temperature $T_0$ (°C)

$\alpha$ : TCR (Temperature Coefficient of Resistivity)

$\beta$ : B-constant of Thermistor

Here, a $\alpha$ value may be calculated from the graph of FIG. 16 where a lattice constant $R^2$ is close to 1, based on the graph of FIG. 16 where a maximum operating temperature of a battery is 60°C or less. A $\beta$ value may be a value previously provided by a manufacturer.

According to the present disclosure, a constant required for a resistance calculation formula may be derived by using measurement values using a resistance characteristic change graph according to a temperature of PTC, and overheating of the battery cell may be detected by using the resistance calculation formula. Accordingly, prediction accuracy at a normal operating temperature may be increased at the expense of prediction accuracy at an abnormal heating temperature.

The battery management unit according to one or more embodiments may determine whether one of the battery cells C is overheated by using a temperature resistance table of Table 1 calculated by inputting a value of combined resistance of the first type temperature measurement element P into a temperature calculation formula of Equation 2 derived as an inverse function of the resistance calculation formula.

Equation 2

$$T = \frac{1}{\alpha}\left(\frac{1}{\frac{1}{\beta}\ln\left(\frac{R-R_{-30}}{R_0}\right)+\frac{1}{T_0+273}} - 273\right)$$

Table 1

| Standard temperature (°C) | PTC resistance (kΩ) | Combined PTC resistance (kΩ) | Abnormal temperature | | | |
|---|---|---|---|---|---|---|
| | | | 60°C | 70°C | 80°C | 90°C |
| -30 | 1.873 | 13.114 | 38% | 63% | 107% | 167% |
| -20 | 1.924 | 13.471 | 37% | 61% | 104% | 162% |
| -10 | 2.016 | 14.115 | 34% | 57% | 98% | 154% |
| 0 | 2.155 | 15.083 | 31% | 53% | 91% | 143% |
| 10 | 2.345 | 16.413 | 27% | 47% | 82% | 131% |
| 20 | 2.612 | 18.281 | 23% | 41% | 73% | 116% |
| 25 | 2.792 | 19.546 | 21% | 37% | 67% | 107% |
| 30 | 3.037 | 21.259 | 18% | 33% | 60% | 98% |
| 40 | 3.914 | 27.396 | 11% | 23% | 44% | 73% |
| 50 | 5.026 | 35.185 | 5% | 14% | 31% | 53% |

For example, Table 1 shows PTC resistance and 10-combined PTC resistance according to a standard temperature. Also, a temperature resistance table showing a resistance change rate according to an abnormal temperature for the PTC resistance and the 10-combined PTC resistance is illustrated.

Referring to FIG. 17 together, in S110 and S120, the battery management unit according to one or more embodiments may calculate whether a combined PTC resistance value has increased (e.g., determine if the PTC resistance has increased at S110 and determine whether parallel PTC resistance value has increased at S120). In this case, in operation S130, the battery management unit may determine whether a battery cell is abnormally heated by comparing the combined resistance value according to a standard temperature of Table 1 with a combined resistance value obtained by using a resistance calculation formula of Equation 1 or a temperature calculation formula of Equation 2. When it is determined that the battery cell is abnormally heated (e.g., S140), the battery management unit may operate a protection circuit in operation S150.

For example, as shown in Table 1, when one of seven battery cells having a standard temperature of 40° is abnormally heated to 60°C, a resistance value may be 30.33 kohm which may be measured 11% higher than a reference value of 27.396 kohm.

According to the present disclosure, overheating of the battery cell may be determined based on a change in resistance of a combined PTC resistance value. That is, because abnormality of a cell stack including a plurality of cells is recognized rather than measuring abnormal temperatures of individual cells, an inexpensive detection circuit may be used by reducing a sensing circuit, and whether a cell is abnormal may be accurately detected.

Although the embodiments have been described by the limited embodiments and the drawings as described above, various modifications and variations are possible by one of ordinary skill in the art from the above description. For example, appropriate results may be achieved even when the described techniques are performed in a different order from the described method, and/or the described elements such as a system, a structure, an apparatus, and a circuit are combined or integrated in a different manner from the described method or replaced or substituted by other elements or equivalents.

Hence, other implementations, other embodiments, and equivalents of the claims are within the scope of the following claims.

According to the present disclosure, there is provided a battery pack and a method of controlling the same, in which erroneous detection of overheating may be prevented and overheating may be detected without omission by using together first and second type temperature measurement elements having different resistance characteristics according to a temperature change. However, the scope of the present disclosure is not limited by these effects.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by one of ordinary skill in the art that various changes in form and details may be made therein without departing from the scope of the present disclosure as defined by the following claims.

Claims

1.  A battery pack comprising:

battery cells (C);
a first measurement circuit unit (M1) and a second measurement circuit unit (M2) configured to measure temperature information of the battery cells and respectively comprising a first type temperature measurement element (P) and a second type temperature measurement element (N) having different characteristics of a resistance change according to a temperature change, the first measurement circuit unit and the second measurement circuit unit being on a common base substrate (S) or on different individual base substrates (S3, S4); and
a battery management unit (BMS) configured to determine whether the battery cells are overheated based on the temperature information of the battery cells; wherein
the first type temperature measurement element has a positive characteristic as a characteristic of the resistance change according to the temperature change and displays a nonlinear resistance change at an inflection point of a profile of the resistance change according to the temperature change;
the second type temperature measurement element has a negative characteristic as a characteristic of the resistance change according to the temperature change and displays a linear resistance change in the profile of the resistance change according to the temperature change; and
wherein the battery management unit is further configured to:

calculate a resistance prediction value by substituting a temperature value of the second type temperature measurement element measured based on a measurement value of the second measurement circuit unit into a resistance calculation formula derived based on a resistance profile according to a temperature of the first type temperature measurement element;
calculate a resistance measurement value based on a first voltage measurement value for combined resistance of the first type temperature measurement element measured by the first measurement circuit unit; and

determine whether the battery cells are overheated based on the resistance prediction value and the resistance measurement value.

2.  The battery pack of claim 1, wherein:

the first type temperature measurement element is one of a plurality of first type temperature measurement elements in series and respectively allocated to the battery cells in a direction (Z1) in which the battery cells are arranged; and
the second type temperature element is one of a plurality of second type temperature measurement elements that is less in number than a number of the plurality of first type temperature measurement elements arranged in the direction in which the battery cells are arranged.

3. The battery pack of claim 2, wherein:

   the common base substrate or the individual base substrates comprise a flexible insulating film (S1) or a rigid insulating substrate (S2),
   the first type temperature measurement element or the second type temperature measurement element are patterned or mounted in a form of a chip on the common base substrate or the individual base substrates.

4. The battery pack of any preceding claim, wherein the battery management unit is further configured to determine whether the battery cells are overheated based on a first voltage measurement value for combined resistance of the plurality of first type temperature measurement elements measured by the first measurement circuit unit.

5. The battery pack of any preceding claim, wherein the battery management unit is further configured to determine whether the battery cells are overheated by using a temperature resistance table calculated by substituting a value of the combined resistance of the first type temperature measurement element into a temperature calculation formula derived as an inverse function of the resistance calculation formula.

6. A method of controlling a battery pack comprising battery cells (C), a first measurement circuit unit (M1), and a second measurement circuit unit (M2) that are configured to measure temperature information of the battery cells and respectively comprising a first type temperature measurement element (P) and a second type temperature measurement element (N) having different characteristics of a resistance change according to a temperature change, the first measurement circuit unit and the second measurement circuit unit being formed on a common base substrate (S) or different individual base substrates (S3, S4), and a battery management unit (BMS) configured to determine whether the battery cells are overheated based on the temperature information of the battery cells,

   wherein the method comprises determining, by the battery management unit, whether the battery cells are overheated based on a first measurement value based on an output of the first measurement circuit unit and a second measurement value based on an output of the second measurement circuit unit;
   wherein:

   the first type temperature measurement element has a positive characteristic as a characteristic of the resistance change according to the temperature change and displays a nonlinear resistance change at an inflection point of a profile of the resistance change according to the temperature change; and
   the second type temperature measurement element has a negative characteristic as a characteristic of the resistance change according to the temperature change and displays a linear resistance change in the profile of the resistance change according to the temperature change;
   the method further comprising, by the battery management unit:

   calculating a resistance prediction value by substituting a temperature value of the second type temperature measurement element measured based on a measurement value of the second measurement circuit unit into a resistance calculation formula derived based on a resistance profile according to a temperature of the first type temperature measurement element;
   calculating a resistance measurement value based on a first voltage measurement value for combined resistance of the first type temperature measurement element measured from the first measurement circuit unit; and
   determining whether the battery cells are overheated based on the resistance prediction value and the resistance measurement value.

7. The method of claim 6, further comprising, by the battery management unit, determining whether the first measurement value is equal to or greater than a trigger point corresponding to the inflection point of the first type temperature measurement element and determine that the battery cells are overheated when the first measurement value is equal to or greater than the trigger point and the second measurement value is equal to or greater than a threshold value.

8. The method of any one of claim 6 or claim 7, wherein the first type temperature measurement element is one of a plurality of first type temperature measurement elements in series and respectively allocated to the battery cells in a direction in which the battery cells are arranged, and wherein the battery management unit is further configured to determine whether the battery cells are overheated based on a first voltage measurement value for combined resistance of the first type temperature measurement element measured by the first measurement circuit unit.

9. The method of any one of claims 6 - 8, further comprising, by the battery management unit, determining whether the battery cells are overheated by using a temperature resistance table calculated by substituting a value of the combined resistance of the first type temperature measurement element into a temperature calculation formula derived as an inverse function of the resistance calculation formula.

10. A computer program stored in a recording medium to execute the method of any one of claims 6 - 9 by using a computing device.


**Patentansprüche**

1. Batteriepack, umfassend

Batteriezellen (C);
eine erste Messschaltungseinheit (M1) und eine zweite Messschaltungseinheit (M2), die zur Messung von Temperaturinformationen der Batteriezellen konfiguriert sind und jeweils ein Temperaturmesselement (P) ersten Typs und ein Temperaturmesselement (N) zweiten Typs mit unterschiedlichen Widerstandsänderungscharakteristika in Abhängigkeit von einer Temperaturänderung umfassen, wobei die erste Messschaltungseinheit und die zweite Messschaltungseinheit auf einem gemeinsamen Basissubstrat (S) oder auf verschiedenen individuellen Basissubstraten (S3, S4) angeordnet sind; und
eine Batteriemanagementeinheit (BMS), die so konfiguriert ist, dass sie anhand der Temperaturinformationen der Batteriezellen feststellt, ob die Batteriezellen überhitzt sind; wobei
das Temperaturmesselement des ersten Typs eine positive Kennlinie für die Widerstandsänderung in Abhängigkeit von der Temperaturänderung auf und eine nichtlineare Widerstandsänderung an einem Wendepunkt des Widerstandsänderungsprofils in Abhängigkeit von der Temperaturänderung aufweist;
das Temperaturmesselement des zweiten Typs eine negative Kennlinie hinsichtlich der Widerstandsänderung in Abhängigkeit von der Temperaturänderung und im Verlauf der Widerstandsänderung in Abhängigkeit von der Temperaturänderung eine lineare Widerstandsänderung aufweist; und
wobei die Batteriemanagementeinheit weiter konfiguriert ist zum:

Berechnen eines Widerstandsvorhersagewerts, indem ein Temperaturwert des Temperaturmesselements des zweiten Typs, der auf der Grundlage eines Messwerts der zweiten Messschaltungseinheit gemessen wurde, in eine Widerstandsberechnungsformel substituiert wird, die auf der Grundlage eines Widerstandsprofils gemäß der Temperatur des Temperaturmesselements des ersten Typs abgeleitet wurde;
Berechnen eines Widerstandsmesswert auf der Grundlage eines ersten Spannungsmesswerts für den Gesamtwiderstand des Temperaturmesselements des ersten Typs, der von der ersten Messschaltungseinheit gemessen wird; und

Bestimmen, anhand des Widerstandsvorhersagewerts und des Widerstandsmesswerts, ob die Batteriezellen überhitzt sind.

2. Batteriepack nach Anspruch 1, wobei:

das Temperaturmesselement des ersten Typs eines von mehreren Temperaturmesselementen des ersten Typs ist, die in Reihe geschaltet und jeweils den Batteriezellen in eine Richtung (Z1) zugeordnet sind, in der die Batteriezellen angeordnet sind; und
das zweite Temperaturmesselement eines von mehreren Temperaturmesselementen des zweiten Typs ist, dessen Anzahl geringer ist als die Anzahl der Temperaturmesselemente des ersten Typs, die in Richtung der Anordnung der Batteriezellen angeordnet sind.

3. Batteriepack nach Anspruch 2, wobei:

das gemeinsame Basissubstrat bzw. die einzelnen Basissubstrate eine flexible Isolierfolie (S1) oder ein starres Isoliersubstrat (S2) umfassen,
das Temperaturmesselement des ersten Typs oder das Temperaturmesselement des zweiten Typs als Chip auf dem gemeinsamen Basissubstrat bzw. den einzelnen Basissubstraten strukturiert oder montiert ist.

4. Batteriepack nach einem der vorstehenden Ansprüche, wobei die Batteriemanagementeinheit weiter so konfiguriert ist, dass sie anhand eines ersten Spannungsmesswerts für den kombinierten Widerstand der Mehrzahl von Temperaturmesselementen des ersten Typs, gemessen von der ersten Messschaltungseinheit, bestimmen kann, ob die Batteriezellen überhitzt sind.

5. Batteriepack nach einem der vorstehenden Ansprüche, wobei die Batteriemanagementeinheit weiter so konfiguriert ist, dass sie anhand einer Temperaturwiderstandstabelle, die durch Einsetzen eines Wertes des kombinierten Widerstands des Temperaturmesselements des ersten Typs in eine als Umkehrfunktion der Widerstandsberechnungsformel abgeleitete Temperaturberechnungsformel berechnet wird, bestimmen kann, ob die Batteriezellen überhitzt sind.

6. Verfahren zum Steuern eines Batteriepacks, umfassend Batteriezellen (C), eine erste Messschaltungseinheit (M1) und eine zweite Messschaltungseinheit (M2), die zur Messung der Temperaturinformationen der Batteriezellen konfiguriert sind und jeweils ein Temperaturmesselement ersten Typs (P) und ein Temperaturmesselement zweiten Typs (N) mit unterschiedlichen Widerstandsänderungscharakteristiken in Abhängigkeit von der Temperaturänderung umfassen, wobei die erste und die zweite Messschaltungseinheit auf einem gemeinsamen Basissubstrat (S) oder auf verschiedenen individuellen Basissubstraten (S3, S4) ausgebildet sind, und eine Batteriemanagementeinheit (BMS), die so konfiguriert ist, dass sie anhand der Temperaturinformationen der Batteriezellen erkennt, ob diese überhitzt sind,

wobei das Verfahren das Bestimmen umfasst, ob die Batteriezellen überhitzt sind, durch die Batteriemanagementeinheit, auf der Grundlage eines ersten Messwerts, der auf einem Ausgang der ersten Messschaltungseinheit basiert, und eines zweiten Messwerts, der auf einem Ausgang der zweiten Messschaltungseinheit basiert;
wobei:

das Temperaturmesselement des ersten Typs eine positive Kennlinie hinsichtlich der Widerstandsänderung in Abhängigkeit von der Temperaturänderung und an einem Wendepunkt des Widerstandsänderungsprofils eine nichtlineare Widerstandsänderung aufweist; und
das Temperaturmesselement des zweiten Typs eine negative Kennlinie für die Widerstandsänderung in Abhängigkeit von der Temperaturänderung und im Verlauf der Widerstandsänderung in Abhängigkeit von der Temperaturänderung eine lineare Widerstandsänderung aufweist;
das Verfahren weiter umfassend, durch die Batteriemanagementeinheit:

Berechnen eines Widerstandsvorhersagewertes durch Einsetzen eines Temperaturwertes des Temperaturmesselements des zweiten Typs, der auf der Grundlage eines Messwerts der zweiten Messschaltungseinheit ermittelt wurde, in eine Widerstandsberechnungsformel, die auf der Grundlage eines Widerstandsprofils gemäß der Temperatur des Temperaturmesselements des ersten Typs abgeleitet wurde;
Berechnen eines Widerstandsmesswertes auf der Grundlage eines ersten Spannungsmesswertes für den Gesamtwiderstand des Temperaturmesselements des ersten Typs, gemessen von der ersten Messschaltungseinheit; und
Bestimmen, ob die Batteriezellen überhitzt sind, anhand des Widerstandsvorhersagewerts und des Widerstandsmesswerts.

7. Verfahren nach Anspruch 6, weiter umfassend, durch die Batteriemanagementeinheit, Bestimmen, ob der erste Messwert gleich oder größer als ein Auslösepunkt ist, der dem Wendepunkt des Temperaturmesselements des ersten Typs entspricht, und Bestimmen, dass die Batteriezellen überhitzt sind, wenn der erste Messwert gleich oder größer als der Auslösepunkt ist und der zweite Messwert gleich oder größer als ein Schwellenwert ist.

8. Verfahren nach einem der Ansprüche 6 oder 7, wobei das erste Temperaturmesselement eines von mehreren ersten Temperaturmesselementen ist, die in Reihe geschaltet und jeweils den Batteriezellen in Richtung ihrer Anordnung zugeordnet sind, und wobei die Batteriemanagementeinheit weiter so konfiguriert ist, dass sie anhand eines ersten Spannungsmesswerts für den Gesamtwiderstand des Temperaturmesselements des ersten Typs, der von der ersten Messschaltungseinheit gemessen wird, bestimmen kann, ob die Batteriezellen überhitzt sind.

9. Verfahren nach einem der Ansprüche 6 bis 8, weiter umfassend, durch die Batteriemanagementeinheit, Bestimmen, anhand einer Temperaturwiderstandstabelle, ob die Batteriezellen überhitzt sind, wobei die Tabelle berechnet wird, indem ein Wert des kombinierten Widerstands des Temperaturmesselements des ersten Typs in eine als Umkehrfunktion der Widerstandsberechnungsformel abgeleitete Temperaturberechnungsformel eingesetzt wird.

10. Computerprogramm, das auf einem Aufzeichnungsmedium gespeichert ist, um das Verfahren nach einem der Ansprüche 6 - 9 unter Verwendung einer Computervorrichtung auszuführen.

**Revendications**

1. Bloc-batterie, comprenant :

   des cellules (C) de batterie ;
   une première unité de circuit de mesure (M1) et une seconde unité de circuit de mesure (M2) configurées pour mesurer les informations de température des cellules de batterie et comprenant, respectivement, un élément de mesure de température de premier type (P) et un élément de mesure de température de second type (N) présentant des caractéristiques différentes d'une variation de la résistance en fonction d'une variation de température, la première unité de circuit de mesure et la seconde unité de circuit de mesure étant situées sur un substrat de base commun (S) ou sur des substrats de base individuels différents (S3, S4) ; et
   une unité de gestion de batterie (BMS) configurée pour déterminer si les cellules de batterie sont en surchauffe en fonction des informations de température des cellules de batterie ; dans lequel
   l'élément de mesure de température de premier type présente une caractéristique positive en tant que caractéristique de la variation de la résistance en fonction de la variation de température et affiche une variation de la résistance non linéaire en un point d'inflexion d'un profil de la variation de la résistance en fonction de la variation de température ;
   l'élément de mesure de température de second type présente une caractéristique négative en tant que caractéristique de la variation de la résistance en fonction de la variation de température et affiche une variation de la résistance linéaire dans le profil de la variation de la résistance en fonction de la variation de température ;
   dans lequel l'unité de gestion de batterie est configurée en outre pour :

   calculer une valeur de prédiction de la résistance en substituant une valeur de température de l'élément de mesure de température de second type mesurée sur la base d'une valeur de mesure de la seconde unité de circuit de mesure dans une formule de calcul de la résistance dérivée sur la base d'un profil de la résistance en fonction d'une température de l'élément de mesure de température de premier type ;
   calculer une valeur de mesure de la résistance sur la base d'une première valeur de mesure de tension pour la résistance combinée de l'élément de mesure de température de premier type mesuré par la première unité de circuit de mesure ; et

   déterminer si les cellules de batterie sont en surchauffe sur la base de la valeur de prédiction de la résistance et de la valeur de mesure de la résistance.

2. Bloc-batterie selon la revendication 1, dans lequel

   l'élément de mesure de température de premier type est l'un parmi une pluralité d'éléments de mesure de température de premier type disposés en série et attribués, respectivement, aux cellules de la batterie dans une direction (Z1) dans laquelle les cellules de batterie sont agencées ; et
   l'élément de température de second type est l'un parmi une pluralité d'éléments de mesure de température de second type, dont le nombre est inférieur à un nombre parmi la pluralité d'éléments de mesure de température de premier type agencés dans la direction dans laquelle les cellules de batterie sont agencées.

3. Bloc-batterie selon la revendication 2, dans lequel :

   le substrat de base commun ou les substrats de base individuels comprennent un film isolant flexible (S1) ou un substrat isolant rigide (S2),
   l'élément de mesure de température de premier type ou l'élément de mesure de température de second type sont structurés ou montés sous la forme d'une puce sur le substrat de base commun ou sur des substrats de base individuels.

**4.** Bloc-batterie selon une quelconque revendication précédente, dans lequel l'unité de gestion de batterie est configurée en outre pour déterminer si les cellules de batterie sont en surchauffe sur la base d'une première valeur de mesure de tension pour la résistance combinée parmi la pluralité d'éléments de mesure de température de premier type mesurés par la première unité de circuit de mesure.

**5.** Bloc-batterie selon une quelconque revendication précédente, dans lequel l'unité de gestion de batterie est configurée en outre pour déterminer si les cellules de batterie sont en surchauffe en utilisant un tableau de la résistance à la température calculé en substituant une valeur de la résistance combinée de l'élément de mesure de température de premier type dans une formule de calcul de température dérivée en tant que fonction inverse de la formule de calcul de la résistance.

**6.** Procédé de commande d'un bloc-batteries comprenant des cellules (C) de batterie, une première unité de circuit de mesure (M1) et une seconde unité de circuit de mesure (M2) configurées pour mesurer les informations de température des cellules de batterie et comprenant, respectivement, un élément de mesure de température de premier type (P) et un élément de mesure de température de second type (N) présentant des caractéristiques différentes d'une variation de la résistance en fonction d'une variation de température, la première unité de circuit de mesure et la seconde unité de circuit de mesure étant formées sur un substrat de base commun (S) ou sur des substrats de base individuels différents (S3, S4), et une unité de gestion de batterie (BMS) étant configurée pour déterminer si les cellules de batterie sont en surchauffe sur la base des informations de température des cellules de batterie,

dans lequel le procédé comprend la détermination, par l'unité de gestion de batterie, si les cellules de batterie sont en surchauffe sur la base d'une première valeur de mesure basée sur un résultat de la première unité de circuit de mesure et d'une seconde valeur de mesure basée sur un résultat de la seconde unité de circuit de mesure ;
dans lequel :

l'élément de mesure de température de premier type présente une caractéristique positive en tant que caractéristique de la variation de la résistance en fonction de la variation de température et affiche une variation de la résistance non linéaire au point d'inflexion d'un profil de variation de la résistance en fonction de la variation de température ;
l'élément de mesure de température de second type présente une caractéristique négative en tant que caractéristique de la variation de la résistance en fonction de la variation de température et affiche une variation de la résistance linéaire dans le profil de la variation de la résistance en fonction de la variation de température ;
le procédé comprenant en outre, par l'unité de gestion de batterie :

le calcul d'une valeur de prédiction de la résistance en substituant une valeur de température de l'élément de mesure de température de second type mesurée sur la base d'une valeur de mesure de la seconde unité de circuit de mesure dans une formule de calcul de la résistance dérivée sur la base d'un profil de la résistance en fonction d'une température de l'élément de mesure de température de premier type ;
le calcul d'une valeur de mesure de la résistance sur la base d'une première valeur de mesure de tension pour la résistance combinée du premier élément de mesure de température mesuré à partir de la première unité de circuit de mesure ; et
la détermination permettant de savoir si les cellules de batterie sont en surchauffe sur la base de la valeur de prédiction de la résistance et de la valeur de mesure de la résistance.

**7.** Procédé selon la revendication 6, comprenant en outre, par l'unité de gestion de batterie, la détermination permettant de savoir si la première valeur de mesure est supérieure ou égale à un point de déclenchement correspondant au point d'inflexion du premier élément de mesure de température et la détermination que les cellules de batterie sont en surchauffe lorsque la première valeur de mesure est supérieure ou égale au point de déclenchement et que la seconde valeur de mesure est supérieure ou égale à une valeur seuil.

**8.** Procédé selon l'une quelconque des revendications 6 ou 7, dans lequel l'élément de mesure de température de premier type est l'un parmi une pluralité d'éléments de mesure de température de premier type en série et attribué, respectivement, aux cellules de batterie dans une direction dans laquelle les cellules de batterie sont agencées, et dans lequel l'unité de gestion de batterie est configurée en outre pour déterminer si les cellules de batterie sont en surchauffe sur la base d'une première valeur de mesure de tension pour la résistance combinée de l'élément de mesure de température de premier type mesurée par la première unité de circuit de mesure.

9. Procédé selon l'une quelconque des revendications 6-8, comprenant en outre, par l'unité de gestion de batterie, la détermination permettant de savoir si les cellules de batterie sont en surchauffe en utilisant un tableau de la résistance à la température calculé en substituant une valeur de la résistance combinée de l'élément de mesure de température de premier type dans une formule de calcul de température dérivée en tant que fonction inverse de la formule de calcul de la résistance.

10. Programme informatique stocké sur un support d'enregistrement pour exécuter le procédé selon l'une quelconque des revendications 6-9 en utilisant un dispositif informatique.

# FIG. 1

# FIG. 2

# FIG. 3

# FIG. 4

# FIG. 5

FIG. 6

FIG. 7

FIG. 8A

C   P   M   CL   S(S1)   N

z2

z1

## FIG. 8B

FIG. 8C

C    P    M    CL    N

S(S1)

z2
z1

FIG. 8D

FIG. 9

FIG. 10

FIG. 11

**FIG. 12**

START

**1202**
OBTAIN FIRST MEASUREMENT VALUE FROM OUTPUT OF FIRST MEASUREMENT CIRCUIT UNIT

**1204**
OBTAIN SECOND MEASUREMENT VALUE FROM OUTPUT OF SECOND MEASUREMENT CIRCUIT UNIT

**1206**
CALCULATE FIRST CONVERSION MEASUREMENT VALUE AND SECOND CALCULATE FIRST CONVERSION MEASUREMENT VALUE AND SECOND CONVERSION MEASUREMENT VALUE RESPECTIVELY FROM FIRST MEASUREMENT VALUE AND SECOND MEASUREMENT VALUE

**1208**
CALCULATE DIFFERENCE VALUE BETWEEN FIRST CONVERSION MEASUREMENT VALUE AND SECOND CONVERSION MEASUREMENT VALUE OR CALCULATE DIFFERENCE VALUE BETWEEN FIRST MEASUREMENT VALUE AND SECOND MEASUREMENT VALUE

**1210**
DIFFERENCE VALUE BETWEEN FIRST CONVERSION MEASUREMENT VALUE AND SECOND CONVERSION MEASUREMENT VALUE ≥ THRESHOLD VALUE? OR DIFFERENCE VALUE BETWEEN FIRST MEASUREMENT VALUE AND SECOND MEASUREMENT VALUE ≥ THRESHOLD VALUE?

NO

YES

**1212**
START PROTECTION OPERATION

END

EP 4 401 194 B1

FIG. 13

# FIG. 14

# FIG. 15

V_out

Temperature (°C)

FIG. 16

# FIG. 17

```
                    ┌──────────────┐
                    │    START     │
                    └──────┬───────┘
                           │
                           ▼
        ┌──────────────────────────────────┐
        │     INCREASE PTC RESISTANCE       │──S110
        └──────────────────┬───────────────┘
                           │
                           ▼              S120
                    ╱─────────────────╲
                   ╱     DETERMINE      ╲        NO
                  ╱  WHETHER PARALLEL PTC ╲──────────────┐
                  ╲  RESISTANCE VALUE HAS ╱              │
                   ╲     INCREASED       ╱               │
                    ╲─────────────────╱                 │
                           │ YES                         │
                           ▼              S130           │         S140
                    ╱─────────────────╲                 │    ┌──────────┐
                   ╱     DETERMINE      ╲       NO        │    │  NORMAL  │
                  ╱   WHETHER THERE      ╲───────────────────▶│          │
                  ╲   IS ABNORMAL        ╱                │    └────┬─────┘
                   ╲     HEATING        ╱                 │         │
                    ╲─────────────────╱                  │         │
                           │ YES                          │         │
                           ▼                              │         │
        ┌──────────────────────────────────┐             │         │
        │    OPERATE PROTECTION CIRCUIT     │──S150       │         │
        └──────────────────┬───────────────┘             │         │
                           │◀──────────────────────────────────────┘
                           ▼
                    ┌──────────────┐
                    │     END      │
                    └──────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011210703 A1